# EUROPEAN PATENT APPLICATION

(11) **EP 4 626 080 A1**
(43) Date of publication of application: **01.10.2025**
(21) Application number: 23916737.2
(22) Date of filing: 18.01.2023
(51) Int. Cl.: H04W 48/08

(54) **COMMUNICATION METHOD, AND DEVICE**

(71) Applicant: GUANGDONG OPPO MOBILE TELECOMMUNICATIONS CORP., LTD., Dongguan, Guangdong 523860 (CN)
(72) Inventor: LU, Fei, Dongguan, Guangdong 523860 (CN); YANG, Haorui, Dongguan, Guangdong 523860 (CN); GUO, Yali, Dongguan, Guangdong 523860 (CN)
(74) Representative: Novagraaf Technologies
(86) International application number: PCT/CN2023/072910
(87) International publication number: WO 2024/152250

(57) **Abstract**

The present application relates to a communication method, a device, a computer readable storage medium, a computer program product and a computer program. The method comprises: an access network device sends first information, wherein the first information comprises related information of a target application function (AF), and the first information is used for triggering each terminal device in one or more terminal devices related to the target AF to report data.

## Description

### TECHNICAL FIELD

The present disclosure relates to the technical field of communications, and in particular, relates to a method for communication, and a device, a computer-readable storage medium, a computer program product and a computer program thereof.

### RELATED ART

In the related art, a terminal, especially a zero-power terminal, reports data as follows. An access network device triggers the terminal to report data, and then the access network device transmits the data reported by the terminal to an application function (AF). However, since the access network device covers a larger area, the access network device may trigger, over one message, a large number of terminals to report data. Therefore, how to efficiently determine a terminal associated with an AF from a large number of terminals and transmit only the data from the terminal to the AF is a problem to be solved.

### SUMMARY

Embodiments of the present disclosure provide a method for communication, and a device, a computer-readable storage medium, a computer program product and a computer program thereof.

The embodiments of the present disclosure provide a method for communication, performed by an access network device. The method includes:
transmitting first information, wherein the first information includes related information of a target AF, and the first information is used to trigger each of one or more terminal devices associated with the target AF to report data.

The embodiments of the present disclosure provide a method for communication, performed by a first terminal device. The method includes:
receiving first information, wherein the first information includes related information of a target AF, and the first information is used to trigger each of one or more terminal devices associated with the target AF to report data.

The embodiments of the present disclosure provide a method for communication, performed by a first core network device. The method includes:
transmitting indication information, wherein the indication information is used to instruct an access network device to transmit first information, the first information including related information of a target AF, and the first information being used to trigger each of one or more terminal devices associated with the target AF to report data.

The embodiments of the present disclosure provide an access network device. The access network device includes:
a first communication unit, configured to transmit first information, wherein the first information includes related information of a target AF, and the first information is used to trigger each of one or more terminal devices associated with the target AF to report data.

The embodiments of the present disclosure provide a first terminal device. The first terminal device includes:
second communication unit, configured to receive first information, wherein the first information includes related information of a target AF, and the first information is used to trigger each of one or more terminal devices associated with the target AF to report data.

The embodiments of the present disclosure provide a first core network device. The first core network device includes:
a third communication unit, configured to transmit indication information, wherein the indication information is used to instruct an access network device to transmit first information, the first information including related information of a target AF, and the first information being used to trigger each of one or more terminal devices associated with the target AF to report data.

The embodiments of the present disclosure provide an access network device. The access network device includes: a transceiver, a processor, and a memory; wherein the memory is configured to store at least one computer program; and the processor is configured to load and run the at least one computer program from the memory, to cause the access network device to perform the method performed by the access network device.

The embodiments of the present disclosure provide a first terminal device. The first terminal device includes: a transceiver, a processor, and a memory; wherein the memory is configured to store at least one computer program; and the processor is configured to load and run the at least one computer program from the memory, to cause the first terminal device to perform the method performed by the first terminal device.

The embodiments of the present disclosure provide a first core network device. The first core network device includes: a transceiver, a processor, and a memory; wherein the memory is configured to store at least one computer program; and the processor is configured to load and run the at least one computer program from the memory, to cause the first core network device to perform the method performed by the first core network device.

The embodiments of the present disclosure provide a chip, configured to implement the above methods.

Specifically, the chip includes a processor, wherein the processor is configured to load and run at least one computer program from a memory, to cause a device equipped with the chip to perform the above methods.

The embodiments of the present disclosure provide a computer-readable storage medium, storing at least one computer program, wherein the at least one computer program, when loaded and run by a device, causes the device to perform the above methods.

The embodiments of the present disclosure provide a computer program product. The computer program product includes at least one computer program instruction, wherein the at least one computer program instruction, when loaded and executed by a computer, causes the computer to perform the above methods.

The embodiments of the present disclosure provide a computer program, wherein the computer program, when loaded and run by a computer, causes the computer to perform the above methods.

In the technical solutions according to the embodiments of the present disclosure, the access network device transmits the first information including the related information of the target AF, which triggers one or more terminal devices associated with the target AF to report data. In this way, one or more terminal devices associated with the target AF are efficiently determined from all terminal devices covered by the access network device based on only one piece of information, and only data from the one or more terminal devices associated with the target AF is reported to the AF, such that the processing efficiency is improved.

### BRIEF DESCRIPTION OF DRAWINGS

FIG. 1 is a schematic diagram of an application scenario according to some embodiments of the present disclosure;
FIG. 2 is a diagram of a system architecture of a 5G network according to some embodiments of the present disclosure;
FIG. 3 is an architecture diagram of a zero-power system;
FIG. 4 is a schematic flowchart of a method for communication according to some embodiments of the present disclosure;
FIG. 5 is a schematic flowchart of a method for communication according to some embodiments of the present disclosure;
FIG. 6 is a schematic flowchart of a method for communication according to some embodiments of the present disclosure;
FIG. 7 is a schematic diagram of a process flow where fifth information is carried in a registration accept message according to some embodiments of the present disclosure;
FIGS. 8 to 11 are schematic diagrams of a plurality of example processes of a method for communication according to some embodiments of the present disclosure;
FIG. 12 is a schematic block diagram of an access network device according to some embodiments of the present disclosure;
FIG. 13 is a schematic block diagram of an access network device according to some embodiments of the present disclosure;
FIG. 14 is a schematic block diagram of a first terminal device according to some embodiments of the present disclosure;
FIG. 15 is a schematic block diagram of a first terminal device according to some embodiments of the present disclosure;
FIG. 16 is a schematic block diagram of a first core network device according to some embodiments of the present disclosure;
FIG. 17 is a schematic block diagram of a communication device according to some embodiments of the present disclosure;
FIG. 18 is a schematic block diagram of a chip according to some embodiments of the present disclosure; and
FIG. 19 is a schematic block diagram of a communication system according to some embodiments of the present disclosure.

### DETAILED DESCRIPTION

The technical solutions according to the embodiments of the present disclosure are described hereinafter in conjunction with the accompanying drawings according to the embodiments of the present disclosure.

The technical solutions of the embodiments of the disclosure are applied to various communication systems, such as a global system of mobile communication (GSM) system, a code division multiple access (CDMA) system, a wideband code division multiple access (WCDMA) system, a general packet radio service (GPRS), a long-term Evolution (LTE) system, an advanced long-term evolution (LTE-A) system, a new radio (NR) system, an NR evolution system, an LTE-based access to unlicensed spectrum (LTE-U) system, an NR-based access to unlicensed spectrum (NR-U) system, a non-terrestrial networks (NTN) system, a universal mobile telecommunication system (UMTS), a wireless local area network (WLAN), a wireless fidelity (Wi-Fi) system, a 5th Generation (5G) system, or other communication systems.

Typically, traditional communication systems support a limited number of connections and are easy to implement. However, with development of communication technologies, mobile communication systems will support not only conventional communications, but also, for example, device-to-device (D2D) communications, machine-to-machine (M2M) communications, machine type communications (MTCs), vehicle-to-vehicle (V2V) communications, or vehicle-to-everything (V2X) communications. The embodiments of the present disclosure are also applicable to these communication systems.

In some embodiments, the communication systems in the embodiments of the present disclosure are applicable to a carrier aggregation (CA) scenario, a dual connectivity (DC) scenario, or a standalone (SA) networking scenario.

In some embodiments, the communication system according to the embodiments of the present disclosure is applicable to an unlicensed spectrum, wherein the unlicensed spectrum is considered as a shared spectrum; or the communication system according to the embodiments of the present disclosure is applicable to a licensed spectrum, wherein the licensed spectrum is considered as an unshared spectrum.

Some embodiments of the present disclosure are described in conjunction with a network device and a terminal device, wherein the terminal device may also be referred to as a user equipment (UE), an access terminal, a subscriber unit, a subscriber station, a mobile terminal, a mobile station, a remote station, a remote terminal, a mobile device, a user terminal, a terminal, a wireless communication device, a user agent, or a user device.

The terminal device is a station (ST) in a WLAN, or a cellular phone, a cordless phone, a Session Initiation Protocol (SIP) phone, a wireless local loop (WLL) station, a personal digital assistant (PDA) device, a handheld device with a wireless communication function, a computing device, or another processing device connected to a wireless modem, an in-vehicle device, a wearable device, a terminal device in a next generation communication system, such as an NR network, or a terminal device in an evolved public land mobile network (PLMN), or the like.

In some embodiments of the present disclosure, the terminal device is deployed on the land, for example, indoors or outdoors, handheld, wearable, or in vehicles; or deployed on water (for example, on a ship); or the terminal device is deployed in air (for example, on an airplane, a balloon, or a satellite).

In some embodiments of the present disclosure, the terminal device is a mobile phone, a pad, a computer with a wireless transceiver function, a virtual reality (VR) terminal device, an augmented reality (AR) terminal, a wireless terminal in industrial control, a wireless terminal in self-driving, a wireless terminal in remote medical, a wireless terminal in smart grid, a wireless terminal in transportation safety, a wireless terminal in smart city, a wireless terminal in smart home, or the like.

By way of example but not limitation, in the embodiments of the present disclosure, the terminal device is a wearable device. The wearable device is also referred to as a wearable smart device, which is a generic term for wearable devices, such as glasses, gloves, watches, clothing, and shoes, which are intelligently designed and developed for daily wear by using wearable technologies. The wearable device is a portable device that is directly worn on the body or integrated into the clothing or accessories of the user. The wearable device is not only a hardware device, but also achieves powerful functions through software support as well as data interaction and cloud interaction. The wearable smart device in a broad sense includes devices such as smart watches or smart glasses that have full functionality and large size, and are capable of implementing all or part of functionality without depending on the smart phone, and devices such as various types of smart bracelets and smart jewelries for monitoring physical signs, which are dedicated to a specific type of application functions and need to be used in cooperation with other devices such as the smart phone.

In some embodiments of the present disclosure, the network device is a device for communication with a mobile device, and the network device is an access point (AP) in a WLAN, a base transceiver station (BTS) in a GSM or a CDMA, a NodeB (NB) in a WCDMA, or an evolutional Node B (eNB, or eNodeB) in the LTE network, a relay station, an access point, an in-vehicle device, a wearable device, a network device (gNB) in an NR network, a network device in a future evolved PLMN network, or a network device in an NTN network.

By way of example but not limitation, in the embodiments of the present disclosure, the network device has mobile characteristics. For example, the network device is a mobile device. In some embodiments, the network device is a satellite, or a balloon station. For example, the satellite is a low Earth orbit (LEO) satellite, a medium Earth orbit (MEO) satellite, a geostationary Earth orbit (GEO) satellite, a high elliptical orbit (HEO) satellite, or the like. In some embodiments, the network device is a base station installed in locations such as land and water.

In some embodiments of the present disclosure, the network device provides services for cells, and the terminal device communicates with the network device over transmission resources (e.g., frequency domain resources or frequency spectrum resources) used by the cell, which is a cell corresponding to the network device (e.g., a base station). The cell is a base station corresponding to a macro base station or a small cell. The small cell herein includes a metro cell, a micro cell, a pico cell, or a femto cell. The small cells are characterized by a small coverage area and low transmission power, which are suitable for providing high-speed data transmission services.

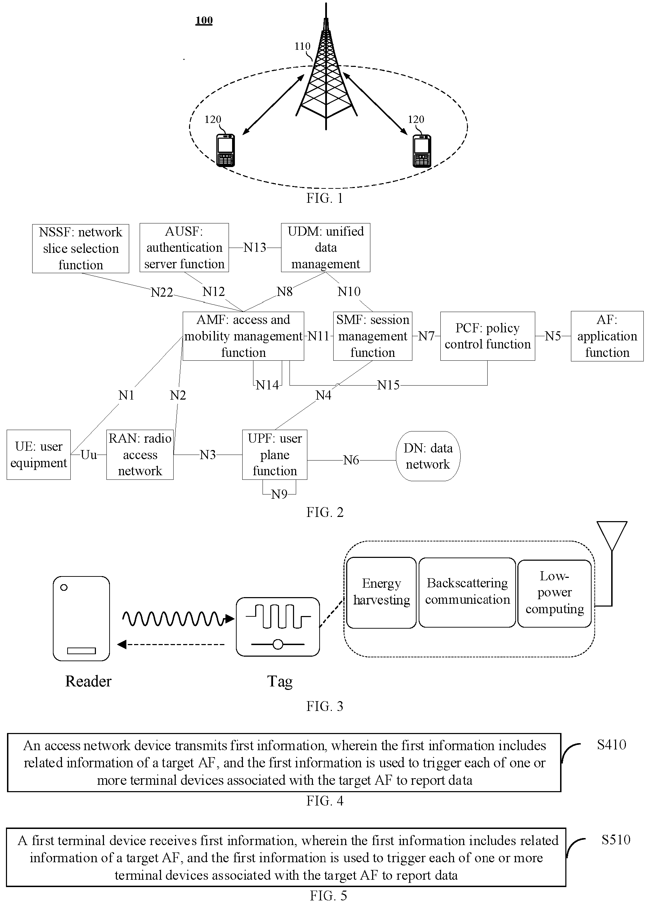

FIG. 1 illustrates a communication system 100 as an example. The communication system includes a network device 110 and two terminal devices 120. In some embodiments, the communication system 100 includes a plurality of network devices 110, and a coverage area of each of the network devices 110 includes other numbers of terminal devices 120, which are not limited in the embodiments of the present disclosure.

In some embodiments, the communication system 100 further includes other network entities such as a mobility management entity (MME) and an access and mobility management function (AMF), which is not limited in the embodiments of the disclosure.

The network devices further include an access network device and a core network device. That is, the wireless communication system further includes a plurality of core networks for communicating with the access network device. The access network device is an evolutional Node B (eNB or e-NodeB), a macro Node B, a micro Node B (also known as "small node B"), a micro-micro Node B, an AP, a transmission point (TP), or a next-generation Node B (gNodeB) in an LTE system, an NR system, or an authorized auxiliary access long-term evolution (LAA-LTE) system.

It is understandable that a device having communication functions in networks/systems according to the embodiments of the present disclosure is referred to as a communication device. Taking the communication system illustrated in FIG. 1 as an example, the communication devices include a network device and a terminal device having a communication function, wherein the network device and the terminal device are specific devices according to the embodiments of the present disclosure, which are not repeated herein. The communication device further includes other devices in the communication system, such as a network controller or a mobile management entity, which are not limited in the embodiments of the present disclosure.

To facilitate understanding of the embodiments of the present disclosure, the basic processes and concepts involved in the embodiments of the present disclosure are briefly described below. It is understandable that the basic processes and concepts introduced below do not constitute any limitations to the embodiments of the present disclosure.

A system architecture of a 5G network is illustrated in FIG. 2. The system architecture involves: a network slice selection function (NSSF), an authentication server function (AUSF), a unified data management (UDM), an access and mobility management function (AMF), a session management function (SMF), a policy control function (PCF), an AF, a user plane function (UPF), and a data network (DN). The NSSF is mainly responsible for management of network slicing related information, e.g., responsible for selecting a network slice for a terminal device. The AUSF is responsible for implementing an identity authentication function of user access. The UDM is responsible for managing and storing subscription data and authentication data. The AMF responsible for mobility management, security anchor point and security context management or the like; and in addition to performing the mobility management on a UE, the AFM is also responsible for forwarding session management related information between the UE and the SMF. The SMF is responsible for session management, UE IP address allocation and management, or the like. The PCF is responsible for developing policies related to the mobility management, session management, charging, and the like for the UE. The AF is applicable to an external application server. The UPF is responsible for complex user plane processing, e.g., forwarding traffic or reporting traffic usage between a radio access network (RAN) and the Internet, implementing policy of quality of service (QoS) or the like. The DN is a 5G core network (5GC) external data network (e.g., the Internet).

Additionally, data is transmitted over corresponding interfaces between various nodes of the 5GC, between the UE and the nodes of the 5GC, between the UE and the RAN, and between the RAN and the nodes of the 5GC. For example, as illustrated in FIG. 2, in the 5GC, the AMF transmits data with the NSSF over an N22 interface; data transmission is carried out between the AMF and the SMF over an N11 interface, data transmission is carried out between the AMF and the AUSF over an N12 interface, and data transmission is carried out between the AMF and the UDM over an N8 interface. Data transmission is carried out between the SMF and the UPF over an N4 interface; data transmission is carried out between the UPF and an external data network over an N6 interface and between the UPF and the AN over an N3 interface. The UE establishes an access stratum (AS) connection to the AN over a Uu interface to implement interaction of access stratum messages and wireless data transmission. The UE establishes a non-access stratum (NAS) connection to the AMF over an N1 interface to implement interaction of NAS messages. The RAN transmits data with the AMF over an N2 interface, and the RAN transmits data with UPF over an N3 interface. It is understandable that only part of the interfaces between the nodes are described, and other interfaces between the nodes in the 5GC in FIG. 2 are not described in detail.

A zero-power communication network is a wireless communication technology applicable to shortdistance and low-speed communication. A zero-power device mainly combines the radio frequency (RF) energy harvesting technology, the backscattering technology and the low-power computing technology to achieve the advantage that the device nodes do not carry a power supply. The basic architecture of the zero-power system is as illustrated in FIG. 3, which includes a reader and a tag. The tag has the functions of energy harvesting, backscattering communication, low-power computing, and the like. The energy harvesting may also be referred to as RF energy collection, focusing on converting RF energy into direct current, and the energy may be stored in a battery or capacitor and may also be collected and directly used to drive a logical circuit, a digital chip, a sensor device, or the like, to implement modulation and emission of backscattering signals, collection and processing of sensing information, and other functions and applications. The tag is a zero-power terminal. It is understandable that, in actual scenarios, the zero-power terminal may be a tag or a conventional device, which is not limited herein.

With the development of the 5G system, the demand that the 5G system allows the zero-power terminal to access a network has appeared in the Third Generation Partnership Project (3GPP) standard. The scenario has the characteristics of extreme environment, which is not suitable for the operating of conventional terminals, use of terminals with extremely low power consumption and costs, and battery-free terminals. The zero-power system may be used in scenarios such as wireless industrial sensing network, smart agriculture, smart warehousing and logistic, and smart home.

Zero-power terminals may be categorized into the following types based on the energy sources and usage manners of the zero-power terminals.
1) Passive zero-power terminal. The passive zero-power terminal does not need a built-in battery. When the passive zero-power terminal approaches a network device, for example, a reader/writer of a radio frequency identification (RFID) system, the passive zero-power terminal is in a near-field range formed by radiation of an antenna of the network device. Therefore, the antenna of the passive zero-power terminal generates an induced current by electromagnetic induction, and the induced current drives a low-power chip circuit of the passive zero-power terminal, such that signals on a forward link are demodulated and signals on a reverse link are modulated. For a backscatter link, the zero-power terminal implements signal transmission by backscattering.
   Accordingly, the passive zero-power terminal does not need a built-in battery to drive either the forward link or the reverse link, and thus the passive zero-power terminal is a true zero-power terminal. The passive zero-power terminal does not need a battery, and an RF circuit and a baseband circuit are very simple. For example, some devices such as a low noise amplifier (LNA), a power amplifier (PA), a crystal oscillator, and an analog-to-digital converter (ADC) are not needed. Therefore, the passive zero-power terminal has many advantages such as small size, light weight, low price, and long service life. This type of passive zero-power terminals may also have characteristics of: 1) being battery-free; 2) acquiring energy (such as radio wave power, solar energy, wind energy, mechanical energy and kinetic energy) from surroundings; and 3) being free of a universal subscriber identity module (USIM). The zero-power terminal may also store a specific amount of energy in the surroundings, but the stored energy is less, and therefore, the functional logic supported by the zero-power terminal is much less than that supported by a conventional terminal such a phone.
2) Semi-passive zero-power terminal. The semi-passive zero-power terminal does not need to be equipped with a traditional battery, but may use an RF energy harvesting module to harvest radio wave energy and stores the harvested energy in an energy storage unit (such as a capacitor). Upon acquisition of the energy, the energy storage unit drives the low-power chip circuit of the semi-passive zero-power terminal, such that signals on a forward link are demodulated and signals on a reverse link are modulated. For a backscatter link, the semi-passive zero-power terminal implements signal transmission by backscattering.
   Accordingly, the semi-passive zero-power terminal does not need the built-in battery to drive either the forward link or the backward link. Although the energy stored in the capacitor is actually used during running of the semi-passive zero-power, the energy comes from the radio energy harvested by the energy harvesting module. Therefore, the semi-passive zero-power terminal is also a true zero-power terminal. The semi-passive zero-power terminal inherits many advantages of the passive zero-power terminal, such as small size, light weight, low price and long service life.
3) Active zero-power terminal. In some scenarios, the used zero-power terminal may also be an active zero-power terminal, which may be equipped with a built-in battery. The battery is used to drive the low-power chip circuit of the active zero-power terminal to demodulate signals on a forward link and modulate signals on a reverse link. However, for a backscatter link, the active zero-power terminal transmits signals by backscattering. Therefore, the zero power consumption of this terminal is mainly reflected in the fact that the signal transmission on the reverse link does not need the power of the terminal but is implemented by backscattering. The active zero-power terminal supplies power to the RFID chip by the built-in battery, to increase a read and write range of the tag and improve the reliability of communication. Therefore, the active zero-power terminal may be applied in some scenarios with relatively stricter requirements on communication range and read delay.

It should be understood that the terms "system" and "network" are often used interchangeably herein. The term "and/or" herein is merely a way to describe an association relationship between associated objects, indicating that there are three possible relationships. For example, the phrase "A and/or B" means (A), (B), or (A and B). In addition, the symbol "/" herein generally indicates an "or" relationship between the associated objects.

It should be understood that the term "indicate" in the embodiments of the present disclosure is a direct indication, an indirect indication, or an indication that there is an associated relationship. For example, the phrase "A indicating B" means that A indicates B directly, e.g., B is acquired by A; or that A indicates B indirectly, e.g., A indicates C by which B may be acquired; or that an association is present between A and B.

In the description of the embodiments of the present disclosure, the term "correspond" may indicate a direct or an indirect correspondence relationship between two objects, an association relationship between two objects, a relationship of indicating and being indicated, configuring and being configured, or the like.

For ease of understanding of the technical solutions according to the embodiments of the present disclosure, the relevant technologies of the embodiments of the present disclosure are described hereinafter, and the following relevant technologies may be combined with the technical solutions of the embodiments of the present disclosure in any combination as an optional option, and all of them shall fall within the protection scope of the embodiments of the present disclosure.

FIG. 4 illustrates a schematic flowchart of a method for communication according to some embodiments of the present disclosure. The method includes at least part of the following content.

In S410, an access network device transmits first information, wherein the first information includes related information of a target AF, and the first information is used to trigger each of one or more terminal devices associated with the target AF to report data.

FIG. 5 illustrates a schematic flowchart of a method for communication according to some embodiments of the present disclosure. The method includes at least part of the following content.

In S510, a first terminal device receives first information, wherein the first information includes related information of a target AF, and the first information is used to trigger each of one or more terminal devices associated with the target AF to report data.

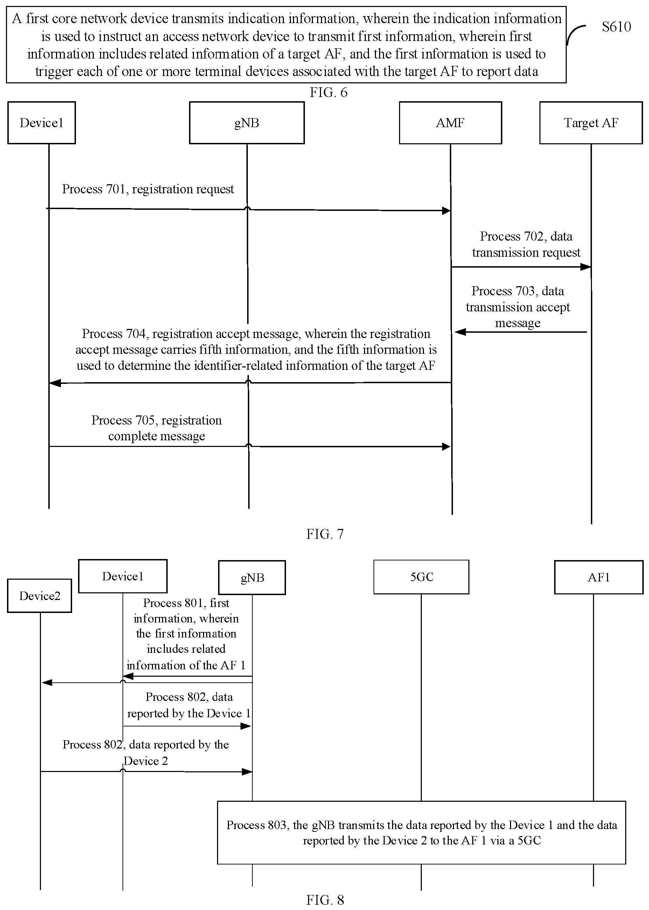

FIG. 6 illustrates a schematic flowchart of a method for communication according to some embodiments of the present disclosure. The method includes at least part of the following content.

In S610, a first core network device transmits indication information, wherein the indication information is used to instruct an access network device to transmit first information, wherein the first information includes related information of a target AF, and the first information is used to trigger each of one or more terminal devices associated with the target AF to report data.

The access network device may be any one of a base station, a gNB, an eNB, or the like. The first core network device may be an AMF or a core network device associated with the target AF.

The one or more terminal devices associated with the target AF may refer to each of the one or more terminal devices that have registered the target AF or are associated with the target AF. The terminal device is a zero-power terminal. That is, any one of the one or more terminal devices may be a zero-power terminal. It is understandable that the terminal device may also be a device of another type, which is not elaborated herein.

The first terminal device may be a zero-power terminal or a device of another type, which is not limited in the embodiments of the present disclosure. For example, the first terminal device may be or may not be any one of the one or more terminal devices.

The first information may be a trigger message or may be referred to as a paging-like message. The possible names of the first information are not elaborated herein, as long as the first information can be used to trigger the one or more terminal devices associated with the target AF to report data, which is within the protection scope of the embodiments of the present disclosure. Alternatively, the first information may be carried in the trigger message or the paging-like message. The names of the messages that may carry the first information are not elaborated herein.

In some embodiments, the related information of the target AF includes one of an identifier of the target AF, an identifier of a service provider to which the target AF belongs, or identifier-related information of the target AF.

In an example, the first information includes the identifier of the target AF. In another examples, the first information includes the identifier of the service provider to which the target AF belongs. In another example, the first information includes the identifier-related information of the target AF.

For example, the identifier of the target AF is an identity (ID) of the target AF, and the identifier of the service provider to which the target AF belongs is at least one of an ID, a name, a serial number or the like of the service provider to which the target AF belongs.

The identifier-related information of the target AF includes one of a portion of the identifier of the target AF or a portion of the identifier of the service provider to which the target AF belongs.

The identifier-related information of the target AF may also be referred to as truncated information of the target AF or truncated information of the identifier of the target AF.

The portion of the identifier of the target AF may be first M bits of the identifier of the target AF or last N bits of the identifier of the target AF, where M and N are both positive integers. M and N may be less than the total length of the identifier of the target AF, and M and N may be the same or different. The total length of the identifier of the target AF may be 32 bits, 34 bits, 40 bits, or may be even longer or shorter. The possible total length of the identifier of the target AF is not elaborated herein.

For example, the total length of the identifier of the target AF is 34 bits, and M and N are both 4. That is, the portion of the identifier of the target AF may be first 4 bits of the identifier of the target AF or last 4 bits of the identifier of the target AF. It is understandable that the values of M and N are positive integers and are less than the total length of the identifier of the target AF, which all fall within the protection scope of the embodiments of the present disclosure. The various values of M and N are not elaborated herein.

The portion of the identifier of the service provider to which the target AF belongs may be first K bits of the identifier of the service provider to which the target AF belongs or last Q bits of the identifier of the service provider to which the target AF belongs, where K and Q are both positive integers. K and Q may be less than the total length of the identifier of the service provider to which the target AF belongs, and K and Q may be the same or different. The total length of the identifier of the service provider to which the target AF belongs may be 20 bits, 32 bits, 34 bits, 40 bits or may be longer or shorter. The possible total length of the identifier of the service provider to which the target AF belongs is not elaborated herein.

For example, the total length of the identifier of the service provider to which the target AF belongs is 20 bits, and K is 4 and N is 6. That is, the portion of the identifier of the service provider to which the target AF belongs is the first 4 bits of the identifier of the service provider to which the target AF belongs or last 6 bits of the identifier of the service provider to which the target AF belongs. It is understandable that the values of K and Q are positive integers and are less than the total length of the identifier of the service provider to which the target AF belongs, which all fall within the protection scope of the embodiments of the present disclosure. The various values of K and Q are not elaborated herein.

In some embodiments, the access network device transmits second information prior to transmitting the first information, wherein the second information is used to determine the identifier-related information of the target AF. The second information is carried in an AS message.

For example, prior to transmitting the first information, the method further includes: transmitting the second information by the access network device, wherein the second information is used to determine the identifier-related information of the target AF. Accordingly, prior to receiving the first information by the first terminal device, the method further includes: receiving the second information by the first terminal device from the access network device, wherein the second information is used to determine the identifier-related information of the target AF.

The second information includes one of: at least one of an identifier of the target AF or a portion of the identifier of the target AF; at least one of an identifier of a service provider to which the target AF belongs or portion of the identifier of the service provider to which the target AF belongs; or indication information used to determine the identifier-related information of the target AF.

In some embodiments, the second information includes at least one of the identifier of the target AF or portion of the identifier of the target AF.

The second information includes the identifier of the target AF and first M bits of the identifier of the target AF, or includes the identifier of the target AF and last N bits of the identifier of the target AF. For example, M and N are both 4, and in this case, the second information includes the identifier of the target AF and first 4 bits of the identifier of the target AF or includes the identifier of the target AF and last 4 bits of the identifier of the target AF.

Alternatively, the second information only includes portion of the identifier of the target AF.

In some embodiments, the second information includes at least one of the identifier of the service provider to which the target AF belongs or portion of the identifier of the service provider to which the target AF belongs.

The second information includes the identifier of the service provider to which the target AF belongs and first K bits of the identifier of the service provider to which the target AF belongs, or includes the identifier of the service provider to which the target AF belongs and last Q bits of the identifier of the service provider to which the target AF belongs. For example, K and Q are both 4, and in this case, the second information includes the identifier of the service provider to which the target AF belongs and first 4 bits of the identifier of the service provider to which the target AF belongs or includes the identifier of the service provider to which the target AF belongs and last 4 bits of the identifier of the service provider to which the target AF belongs.

Alternatively, the second information only includes portion of the identifier of the service provider to which the target AF belongs.

In some embodiments, the second information includes indication information used to determine the identifier-related information of the target AF.

The indication information used to determine the identifier-related information of the target AF includes one of:
a first-type indicator value, used to indicate that first M bits of the identifier of the target AF serve as the identifier-related information of the target AF, M being a positive integer;
a second-type indicator value, used to indicate that last N bits of the identifier of the target AF serve as the identifier-related information of the target AF, N being a positive integer;
a third-type indicator value, used to indicate that first K bits of the identifier of the service provider to which the target AF belongs serve as the identifier-related information of the target AF, K being a positive integer; or
a fourth-type indicator value, used to indicate that last Q bits of the identifier of the service provider to which the target AF belongs serve as the identifier-related information of the target AF, Q being a positive integer.

The first-type indicator value is used to indicate that the first bit in the identifier of the target AF serves as a start bit and the first bit and consecutive M bits subsequent to the first bit serve as the identifier-related information of the target AF.

Exemplarily, the first-type indicator value includes two parts, the first part is type indication information of the first-type indicator value, and the second part is the number of bits. The number of bits is a specific value of M, which may be, for example, any one of 4, 6, 8, 11 or 15, or the number of bits may be larger or smaller as long as M is less than the total length of the identifier of the target AF, which shall fall within the protection scope of the embodiments of the present disclosure. The number of bits is not limited herein.

The type indication information of the first-type indicator value is predefined based on actual situations, provided that the access network device and the terminal device preconfigure the same indication information of the first-type indicator value, which shall fall within the protection scope of the embodiments of the present disclosure.

The type indication information of the first-type indicator value may be descriptor information indicating the first bit in the identifier of the target AF as the start bit. Alternatively, the type indication information of the first-type indicator value may be expressed as a numerical value, for example, 1, 00, or the like, which is not elaborated herein. Alternatively, the type indication information of the first-type indicator value may be divided into two parts, the first part is indication information of an identifier type, and the second part is indication information indicating that the first bit serves as the start bit. For example, in the type indication information of the first-type indicator value, the indication information of the identifier type is 1, and the indication information indicating that the first bit serves as the start bit is 0, and in this case, the type indication information of the first-type indicator value is expressed as 10.

The second-type indicator value is used to indicate that the last bit in the identifier of the target AF serves as an end bit and the end bit and consecutive N bits prior to the end bit serve as the identifier-related information of the target AF.

Exemplarily, the second-type indicator value includes two parts, the first part is type indication information of the second-type indicator value, and the second part is the number of bits. The number of bits is a specific value of N, which may be, for example, any one of 4, 5, 6, 8, 11, 12 or 15, or the number of bits may be larger or smaller as long as N is less than the total length of the identifier of the target AF, which shall fall within the protection scope of the embodiments of the present disclosure. The number of bits is not limited herein.

The type indication information of the second-type indicator value is predefined based on actual situations, provided that the access network device and the terminal device preconfigure the same indication information of the second-type indicator value, which shall fall within the protection scope of the embodiments of the present disclosure.

The type indication information of the second-type indicator value may be descriptor information indicating the last bit in the identifier of the target AF as the end bit. Alternatively, the type indication information of the second-type indicator value may be expressed as a numerical value, for example, 2, 01, or the like, which is not elaborated herein. Alternatively, the type indication information of the second-type indicator value may be divided into two parts, the first part is indication information of an identifier type, and the second part is indication information indicating that the last bit serves as the end bit. For example, in the type indication information of the second-type indicator value, the indication information of the identifier type is 2, and the indication information indicating that the last bit serves as the end bit is 1, and in this case, the type indication information of the second-type indicator value is expressed as 21.

The third-type indicator value is used to indicate that the first bit in the identifier of the service provider to which the target AF belongs serves as a start bit and the first bit and consecutive K bits subsequent to the first bit serve as the identifier-related information of the target AF.

Exemplarily, the third-type indicator value includes two parts, the first part is type indication information of the third-type indicator value, and the second part is the number of bits. The number of bits is a specific value K, which may be, for example, any one of 4, 6, 10, 11 or 12, or the number of bits may be larger or smaller as long as K is less than the total length of the identifier of the service provider to which the target AF belongs, which shall fall within the protection scope of the embodiments of the present disclosure. The number of bits is not limited herein.

The type indication information of the third-type indicator value is predefined based on actual situations, provided that the access network device and the terminal device preconfigure the same indication information of the third-type indicator value, which shall fall within the protection scope of the embodiments of the present disclosure.

The type indication information of the third-type indicator value may be descriptor information indicating the first bit in the identifier of the service provider to which the target AF belongs as the start bit. Alternatively, the type indication information of the third-type indicator value may be expressed as a numerical value, for example, 3, 10, or the like, which is not elaborated herein. Alternatively, the type indication information of the third-type indicator value may be divided into two parts, the first part is indication information of an identifier type, and the second part is indication information indicating that the first bit serves as the start bit. For example, in the type indication information of the third-type indicator value, the indication information of the identifier type is 3, and the indication information indicating that the first bit serves as the start bit is 0, and in this case, the type indication information of the third-type indicator value is expressed as 30.

The fourth-type indicator value is used to indicate that the last bit in the identifier of the service provider to which the target AF belongs serves as an end bit and the end bit and consecutive Q bits prior to the end bit serve as the identifier-related information of the target AF.

Exemplarily, the fourth-type indicator value includes two parts, the first part is type indication information of the fourth-type indicator value, and the second part is the number of bits. The number of bits is a specific value Q, which may be, for example, any one of 4, 5, 6, 7, 11 or 14, or the number of bits may be larger or smaller as long as Q is less than the total length of the identifier of the target AF, which shall fall within the protection scope of the embodiments of the present disclosure. The number of bits is not limited herein.

The type indication information of the fourth-type indicator value is predefined based on actual situations, provided that the access network device and the terminal device preconfigure the same indication information of the fourth-type indicator value, which shall fall within the protection scope of the embodiments of the present disclosure.

The type indication information of the fourth-type indicator value may be descriptor information indicating the last bit in the identifier of the service provider to which the target AF belongs as the end bit. Alternatively, the type indication information of the fourth-type indicator value may be expressed as a numerical value, for example, 4, 11, or the like, which is not elaborated herein. Alternatively, the type indication information of the fourth-type indicator value may be divided into two parts, the first part is indication information of an identifier type, and the second part is indication information indicating that the last bit serves as the end bit. For example, in the type indication information of the fourth-type indicator value, the indication information of the identifier type is 4, and the indication information indicating that the last bit serves as the end bit is 1, and in this case, the type indication information of the second-type indicator value is expressed as 41.

In a preferred example, the type indication information of the first-type indicator value, the type indication information of the second-type indicator value, the type indication information of the third-type indicator value, and the type indication information of the fourth-type indicator value are expressed in the same manner, for example, expressed by descriptor information or numerical values. In a case where they are expressed as numerical values, they may be expressed as numerical values 1 to 4 or 00, 01, 11 and 10. For another example, they are all expressed by indication information of an identifier type and indication information indicating that either the first bit serves as the start bit or the last bit serves as the end bit.

Additionally, the type indication information of the first-type indicator value, the type indication information of the second-type indicator value, the type indication information of the third-type indicator value, and the type indication information of the fourth-type indicator value may be in the same format. For example, in the indicator value of any type, the type indication information is prior to the number of bits. For example, in a case where the indication information used to determine the identifier-related information of the target AF in the second information is 004, wherein "00" is the type indication information of the first-type indicator value, and "4" is the number of bits, that is, "004" is the first-type indicator value, the first-type indicator value is used to indicate that the first bit in the identifier of the target AF serves as the start bit and the first bit and consecutive 4 bits subsequent to the first bit serve as the identifier-related information of the target AF. This example is merely illustrative, and the possible examples are not elaborated herein.

The second information is carried in one of: a broadcast message, a radio resource control (RRC) message, a medium access control (MAC) control element (CE), or downlink control information (DCI).

In some embodiments, the second information is carried in a broadcast message. In this case, the process that the access network device transmits the second information includes: transmitting the second information to each of one or more devices. The one or more devices at least include the one or more terminal devices associated with the target AF.

The first terminal device may be any one of one or more devices managed or covered by the access network device. For example, the first terminal device is any one of the one or more terminal devices associated with the target AF. For another example, the first terminal device is a terminal device other than the one or more terminal devices associated with the target AF. Because the access network device carries the second information in the broadcast message, the first terminal device receives the broadcast message carrying the second information from the access network device.

Taking the first terminal device being a terminal device associated with the target AF as an example, the first terminal device, subsequent to receiving the second information, determines the identifier-related information of the target AF based on the second information and stores the identifier-related information of the target AF. For example, the second information includes the identifier of the target AF and portion of the identifier of the target AF, and the first terminal device directly takes the portion of the identifier of the target AF as the identifier-related information of the target AF and stores the identifier-related information of the target AF. For another example, the second information includes a first-type indicator value, and the first terminal device extracts, based on the identifier of the target AF preconfigured or prestored by the first terminal device itself and the first-type indicator value, first M bits from the identifier of the target AF as the identifier-related information of the target AF and stores the identifier-related information of the target AF. For another example, the second information includes a fourth-type indicator value, and the first terminal device extracts, based on the identifier of the service provider to which the target AF belongs preconfigured or prestored by the first terminal device itself and the fourth-type indicator value, last Q bits from the identifier of the service provider to which the target AF belongs as the identifier-related information of the target AF and stores the identifier-related information of the target AF. Possible processes performed by the first terminal device are not described illustratively one by one herein.

A plurality of AFs may be provided in a system, and the device associated with each of the plurality of AFs needs to know the identifier-related information of the AF. Accordingly, in this case, the second information is further used to determine the identifier-related information of each of the plurality of AFs including the target AF. The identifier-related information of the AFs other than the target AF in the plurality of AFs is indicated in the same manner as the identifier-related information of the target AF, which is not described any further. In this case, because the first terminal device has prestored the identifier of the AF that is registered by or associated with the first terminal device itself and/or the identifier of the service provider to which the AF belongs, the first terminal device determines the identifier-related information of the AF that is registered by or associated with the first terminal device itself based on the second information and stores the identifier-related information of the AF. The specific determining method is similar to that described above, which is not described any further herein.

It should also be noted that the one or more devices managed or covered by the access network device may also include many other devices in addition to the first terminal device, and the other devices may also perform processing similar to that performed by the first terminal device. For example, the second terminal device is one of the one or more devices managed or covered by the access network device, and the second terminal device is different from the first terminal device. In a case where the second terminal device receives the second information carried in the broadcast message from the access network device, the second terminal device may also determine the identifier-related information of the AF associated with the second terminal device itself based on the second information and store the identifier-related information of the AF. The processing performed by the second terminal device is similar to that performed by the first terminal device above, which are not repeated herein.

In some embodiments, the second information is carried in one of an RRC message, a MAC CE, or DCI. In this case, the second information is carried in a dedicated message of a terminal device.

The RRC message may be any one of an RRC release message, an RRC reconfiguration message, or the like. The possible types of the RRC message are not elaborated herein.

Taking an example where the first terminal device is a terminal device associated with the target AF and the second information is carried in a dedicated message of the first terminal device, the process that the access network device transmits the second information includes: transmitting the second information to the first terminal device. It should be noted that the access network device further transmits the second information to each of the one or more terminal devices associated with the target AF. For example, 10 terminal devices (terminal devices 1 to 10 respectively) are associated with the target AF, and the access network device furthers transmit the second information carried in the RRC message to the terminal device 1 and transmits the second information carried in the RRC messages of the terminal devices 2 to 10 to the terminal devices 2 to 10, respectively.

Additionally, the access network device further transmits corresponding second information to each of one or more terminal devices associated with another AF. For example, the first terminal device is a terminal device associated with another AF, and the second information is carried in a dedicated message of the first terminal device. Taking the dedicated message being an RRC message as an example, the process that the access network device transmits the second information further includes: transmitting the RRC message to the first terminal device. The RRC message carries the second information, and the second information includes at least one of: at least one of an identifier of the another AF or portion of the identifier of the another AF; at least one of an identifier of a service provider to which the another AF belongs or portion of the identifier of the service provider to which the another AF belongs; or indication information used to determine identifier-related information of the another AF. Accordingly, the first terminal device acquires the identifier-related information of the AF associated with the first terminal device itself (i.e., the another AF) based on the second information.

It should also be noted that the one or more devices managed or covered by the access network device further include may other devices in addition to the first terminal device, and the processing between the access network device and the other devices is similar to that between the access network device and the first terminal device. For example, the second terminal device is one of the one or more devices managed or covered by the access network device, and the second terminal device is different from the first terminal device. In a case where the second terminal device receives the second information carried in the RRC message from the access network device, the second terminal device further determines the identifier-related information of the AF associated with the second terminal device itself based on the second information and stores the identifier-related information of the AF. Processes performed by the second terminal device are the same as those performed by the first terminal device, which are not described any further.

In the embodiments of the present disclosure, the terminal device acquires the identifier-related information of the target AF in advance based on the second information, and the identifier-related information of the target AF is shorter than the identifier of the target AF or the identifier of the service provider to which the target AF belongs. In this way, when the first information including shorter identifier-related information of the target AF is transmitted to the terminal device, the terminal device is capable of identifying whether the target AF is an AF registered by or associated with terminal device itself, such that the air interface resources are saved.

In some examples, the second information is generated and transmitted by the access network device.

In some embodiments, the processing performed by the access network device includes: receiving indication information from the first core network device. After receiving the indication information from the first core network device, the access network device further generates and transmits the second information, and then transmits the first information. Accordingly, the process that the first core network device transmits the indication information includes: transmitting the indication information to the access network device. The indication information may be used merely to instruct the access network device to transmit the first information. Alternatively, the indication information may be used to instruct the access network device to transmit the first information and the indication information may further include related information of the target AF.

The process that the first core network device transmits the indication information to the access network device includes: transmitting the indication information to the access network device in a case where the first core network device receives sixth information from the target AF. The sixth information may be used to instruct the access network device to transmit indication information, and the sixth information may be transmitted in a case where the target AF needs to acquire data reported by a terminal device.

The process that the first core network device receives the sixth information from the target AF includes: directly receiving the sixth information from the target AF; or receiving the sixth information from the target AF via at least one of a second core network device or a third core network device, wherein the second core network device is an SMF, and the third core network device is a network exposure function (NEF); or receiving the sixth information from the target AF via a plurality of core network devices, wherein the plurality of core network devices include at least one of the second core network device or the third core network device. In addition, the plurality of core network devices may further include one or more other core network devices in addition to the second core network device and the third core network device, and the possible names of the other core network devices are not elaborated herein.

In some embodiments, the processing performed by the access network device includes: first transmitting the second information and then transmitting the first information at a predefined time. In this case, the first core network device may not transmit the indication information.

The predefined time is determined based on actual situations. For example, the predefined time is part of time points within a time period that is preconfigured by the target AF for the access network device to allow the access network device to acquire data. For example, assuming that the time period preconfigured by the target AF to allow to acquire data is 10 a.m. to 12 p.m. every day, then the predefined time may be at least one of 10 a.m., 11 a.m. or 12 p.m. every day, or the predefined time may also be other time, which is not elaborated herein. Alternatively, the predefined time is determined based on a cycle length preconfigured by the target AF for the access network device. For example, the cycle length is 1 hour, and in this case, the access network device transmits the second information and the first information every one hour.

In an example, the second information is generated and transmitted by the access network device after the access network device receives third information from the fist core network device.

In this example, prior to transmitting the first information, the access network device further receives the third information from the fist core network device, wherein the third information is used to determine the identifier-related information of the target AF.

The third information includes one of: at least one of an identifier of the target AF or a portion of the identifier of the target AF; at least one of am identifier of a service provider to which the target AF belongs or portion of the identifier of the service provider to which the target AF belongs; or indication information used to determine the identifier-related information of the target AF. The contents of the third information are the same as the contents of the second information, which are not repeated any further.

In this example, the processing performed by the access network device includes: determining the identifier-related information of the target AF based on the third information in a case where the access network device receives the third information from the fist core network device; and transmitting the second information. The access network device determines the identifier-related information of the target AF based on the third information and transmits the second information in no particular order. For example, the access network device first determines the identifier-related information of the target AF based on the third information and then transmits the second information. Alternatively, the access network device determines the identifier-related information of the target AF based on the third information and transmits the second information simultaneously. Alternatively, the access network device first transmits the second information and then determines the identifier-related information of the target AF based on the third information. The specific manner of transmitting the second information by the access network device is the same as that described in the above embodiments, which is not repeated any further.

Prior to transmitting the second information, the access network device further generates the second information based on the third information. For example, the access network device directly takes the third information as the second information, that is, the access network device directly takes the contents of the third information as the contents of the second information.

Additionally, the access network device further determines the identifier-related information of the target AF based on the third information and stores the identifier-related information of the target AF. For example, the third information includes the identifier of the target AF and portion of the identifier of the target AF, and the access network device directly takes the portion of the identifier of the target AF as the identifier-related information of the target AF and stores the identifier-related information of the target AF. For another example, the third information includes a first-type indicator value, and the access network device extracts, based on the identifier of the target AF preconfigured or prestored by the access network device itself and the first-type indicator value, first M bits from the identifier of the target AF as the identifier-related information of the target AF and stores the identifier-related information of the target AF. For another example, the third information includes a fourth-type indicator value, and the access network device extracts, based on the identifier of the service provider to which the target AF belongs preconfigured or prestored by the access network device itself and the fourth-type indicator value, last Q bits from the identifier of service provider to which the target AF belongs as the identifier-related information of the target AF and stores the identifier-related information of the target AF. The possible processes performed by the access network device are not illustratively described one by one.

In some embodiments, when transmitting the indication information, the first core network device includes the third information in the indication information.

For example, the processing performed by the access network device includes: receiving the indication information from the first core network device, wherein the indication information includes the third information, and the indication information is used to instruct the access network device to transmit the first information. Accordingly, the process that the first core network device transmits the indication information includes: transmitting the indication information to the access network device, wherein the indication information includes the third information, and the third information is used to determine the identifier-related information of the target AF.

The process that the first core network device transmits the indication information to the access network device includes: transmitting the indication information to the access network device in a case where the first core network device receives sixth information from the target AF, wherein the details of the sixth information are the same as those described above, which are not repeated any further herein.

In this example, subsequent to receiving the indication information, the processing performed by the access network device includes: extracting the third information from the indication information; determining the identifier-related information of the target AF based on the third information and storing the identifier-related information of the target AF; generating the second information based on the third information and transmitting the second information; and transmitting the first information.

In some embodiments, the first core network device transmits the third information and the indication information, respectively. For example, the first core network device first transmits the indication information to the access network device and then transmits the third information to the access network device. Accordingly, the access network device first receives the indication information from the first core network device and then receives the third information from the first core network device, determines the identifier-related information of the target AF based on the third information, transmits the second information, and transmits the first information. For another example, the first core network device first transmits the third information to the access network device and then transmits the indication information to the access network device. Accordingly, the access network device first receives the third information from the first core network device, determines the identifier-related information of the target AF based on the third information, transmits the second information, and transmits the first information in a case where the access network device receives the indication information from the first core network device.

In this case, the indication information may be used merely to instruct the access network device to transmit the first information but do not carry other information. Alternatively, the indication information may be used to instruct the access network device to transmit the first information and the indication information may further include related information of the target AF.

In some embodiments, the first core network device merely transmits the third information but does not transmit the indication information. For example, the processing performed by the access network device includes: in a case where the access network device receives the indication information from the first core network device, the access network device first transmits the second information and then transmits the first information at a predefined time. The description of the predefined time is the same as that described in the above embodiment, which is not described any further.

In some embodiments, the identifier-related information of the target AF is transmitted over a NAS message. In this embodiment, the first core network device directly transmits fifth information to the first terminal device over the NAS message, wherein the fifth information is used to determine the identifier-related information of the target AF.

For example, prior to receiving the first information by the first terminal device, the method further includes: receiving, by the first terminal device, the fifth information from the first core network device, wherein the fifth information is used to determine the identifier-related information of the target AF. Accordingly, the processing performed by the first core network device includes: transmitting the fifth information to the first terminal device. The first core network device is an AMF. In some embodiments, the first core network device may also be another core network devices, such as a core network device associated with the target AF, which is not elaborated herein.

The fifth information includes one of: at least one of an identifier of the target AF or a portion of the identifier of the target AF; at least one of an identifier of a service provider to which the target AF belongs or portion of the identifier of the service provider to which the target AF belongs; or indication information used to determine the identifier-related information of the target AF.

In some embodiments, the fifth information includes at least one of the identifier of the target AF or portion of the identifier of the target AF. The identifier of the target AF and/or the portion of the identifier of the target AF is the same as that described in the above embodiment, which is not described any further.

In some embodiments, the fifth information includes at least one of the identifier of the service provider to which the target AF belongs or portion of the identifier of the service provider to which the target AF belongs. The identifier of the service provider to which the target AF belongs and/or the portion of the identifier of the service provider to which the target AF belongs is the same as that described in the above embodiment, which is not described any further.

In some embodiments, the fifth information includes the indication information used to determine the identifier-related information of the target AF. The indication information used to determine the identifier-related information of the target AF includes one of: a first-type indicator value, used to indicate that first M bits of the identifier of the target AF serve as the identifier-related information of the target AF, M being a positive integer; a second-type indicator value, used to indicate that last N bits of the identifier of the target AF serve as the identifier-related information of the target AF, N being a positive integer; a third-type indicator value, used to indicate that first K bits of the identifier of the service provider to which the target AF belongs serve as the identifier-related information of the target AF, K being a positive integer; or a fourth-type indicator value, used to indicate that last Q bits of the identifier of the service provider to which the target AF belongs serve as the identifier-related information of the target AF, Q being a positive integer.

The indication information used to determine the identifier-related information of the target AF, the first-type indicator value, the second-type indicator value, the third-type indicator value, and the fourth-type indicator value are the same as those described in the above embodiments, which are repeated any further herein.

The fifth information is carried in a NAS message. For example, the fifth information is an information element in the NAS message. The NAS message is one of a registration accept message or a configuration update message. The configuration update message is a UE configuration update message or a UE configuration update command.

In an example, the fifth information is carried in a registration accept message. In this example, the processing performed by the first terminal device further includes: establishing a NAS connection with the first core network device, and transmitting a registration request message to the first core network device; receiving a registration accept message from the first core network device over the NAS connection, wherein the registration accept message carries the fifth information; and transmitting a registration complete message to the first core network device. Accordingly, the processing performed by the first core network device further includes: receiving the registration request message from the first terminal device; transmitting a data transmission request to the target AF; receiving a data transmission accept message from the target AF; transmitting the registration accept message to the first terminal device, wherein the registration accept message carries the fifth information; and receiving the registration complete message from the first terminal device.

For example, the process that the first terminal device establishes the NAS connection with the first core network device and transmits the registration request message to the first core network device includes: establishing an RRC connection with the access network device, and transmitting an RRC message carrying a first NAS message on the RRC connection, wherein the first NAS message is a registration request message. The registration request message carries at least one of identification information, a registration type, or the like of the first terminal device.

The process that the first core network device transmits the data transmission request to the target AF includes: transmitting the data transmission request to the target AF based on at least one of the identification information of the first terminal device included in the registration request message and subscription information corresponding to the first terminal device, wherein the data transmission request includes at least one of the identification information of the first terminal device or the subscription information corresponding to the first terminal device. The subscription information corresponding to the first terminal device is determined by the first core network device from local storage based on the identification information of the first terminal device in the registration request message.

Referring to FIG. 7, the above example is described by taking an example where the first core network device is an AMF, the access network device is a gNB, and the first terminal device is Device 1.

In process 701, Device 1 establishes a NAS connection with the AMF and transmits a registration request message to the AMF.

Process 701 includes that Device 1 establishes an RRC connection with the gNB, and transmits an RRC message carrying a first NAS message over the RRC connection. The first NAS message is a registration request message, and the first NAS message further includes ID information (i.e., identification information), a registration type or the like of the Device 1.

In process 702, the AMF transmits a data transmission request to the target AF based on subscription information of the UE or the ID information of Device 1.

In process 703, the target AF returns a data transmission accept message to the AMF.

In process 704, the AMF returns a registration accept message to Device 1, wherein the registration accept message carries fifth information, wherein the fifth information is used to determine the identifier-related information of the target AF.

The details of the fifth information are the same as those described in the above embodiments, which are not described any further.

In process 705, Device 1 transmits a registration complete message to the AMF.

In another example, the fifth information is carried in a configuration update message. In this example, the processing performed by the first terminal device further includes: receiving, subsequent to transmitting the registration complete message to the first core network device, a configuration update message (such as a UE configuration update message or a UE configuration update command) from the first core network device, wherein the configuration update message carries the fifth information. Accordingly, the processing performed by the first core network device further includes: transmitting, subsequent to receiving the registration complete message from the first terminal device, a configuration update message (such as a UE configuration update message or a UE configuration update command) to the first terminal device, wherein the configuration update message carries the fifth information.

The present example differs from the above example in that, in the present example, the first terminal device receives the configuration update message from the first core network device after the first terminal device completes registration, and the configuration update message carries the fifth information. The processing performed by the first terminal device prior to transmitting the registration complete message in the present example is similar to that in the above example, with the difference that the fifth information is not carried in the registration complete message but carried in the configuration update message.

It should also be noted that the one or more devices managed by the first core network device may also include many other devices in addition to the first terminal device, and the processing between the first core network device and the other devices is similar to that between the first core network device and the first terminal device. For example, a second terminal device is one of the one or more devices managed by the first core network device, and the second terminal device is different from the first terminal device. The second terminal device receives the fifth information carried in the NAS message from the first core network device, and the second terminal device also determines identifier-related information of an AF associated with the second terminal device itself based on the fifth information and store the identifier-related information of the AF. The processing performed by the second terminal device is similar to the processing performed by the first terminal device above, which are not repeated herein.

In the present example, the terminal device acquires the identifier-related information of the target AF in advance based on the fifth information, and the identifier-related information of the target AF is shorter than the identifier of the target AF or the identifier of the service provider to which the target AF belongs. In this way, when the first information including shorter identifier-related information of the target AF is transmitted to the terminal device, the terminal device is capable of identifying whether the target AF is an AF registered by or associated with the terminal device itself, such that the over-the-air resources are saved.

Additionally, in the embodiments of the present disclosure, the access network device also needs to acquire the identifier-related information of the target AF in advance.

In an example, the access network device pre-stores or preconfigures the identifier-related information of the target AF. For example, the access network device pre-stores or preconfigures the identifier of the target AF and the identifier-related information of the target AF, and/or the identifier of the service provider to which the target AF belongs and the identifier-related information of the target AF. It is understandable that, in this example, the access network device may pre-store or preconfigure the identifier-related information of all AFs in the system, which is not elaborated herein.

In another example, prior to transmitting the first information by the access network device, the method further includes: receiving, by the access network device, third information from the first core network device, wherein the third information is used to determine the identifier-related information of the target AF.

In this example, the first core network device transmits the third information to the access network device at the same time of transmitting the fifth information to the first terminal device or subsequent to transmitting the fifth information to the first terminal device.

The third information includes one of: at least one of an identifier of the target AF or a portion of the identifier of the target AF; at least one of an identifier of a service provider to which the target AF belongs or portion of the identifier of the service provider to which the target AF belongs; or indication information used to determine the identifier-related information of the target AF.

In some embodiments, the third information includes at least one of the identifier of the target AF or the portion of the identifier of the target AF. The identifier of the target AF and/or the portion of the identifier of the target AF is the same as that described in the above embodiment, which are not repeated any further.

In some embodiments, the third information includes at least one of the identifier of the service provider to which the target AF belongs or the portion of the identifier of the service provider to which the target AF belongs. The identifier of the service provider to which the target AF belongs and/or the portion of the identifier of the service provider to which the target AF belongs is the same as that described in the above embodiment, which are not repeated any further.

In some embodiments, the third information includes the indication information used to determine the identifier-related information of the target AF. The indication information used to determine the identifier-related information of the target AF includes one of: a first-type indicator value, used to indicate that first M bits of the identifier of the target AF serve as the identifier-related information of the target AF, M being a positive integer; a second-type indicator value, used to indicate that last N bits of the identifier of the target AF serve as the identifier-related information of the target AF, N being a positive integer; a third-type indicator value, used to indicate that first K bits of the identifier of the service provider to which the target AF belongs serve as the identifier-related information of the target AF, K being a positive integer; or a fourth-type indicator value, used to indicate that last Q bits of the identifier of the service provider to which the target AF belongs serve as the identifier-related information of the target AF, Q being a positive integer.

The indication information used to determine the identifier-related information of the target AF, the first-type indicator value, the second-type indicator value, the third-type indicator value, and the fourth-type indicator value are the same as those described in the above embodiment, which are not described any further.

In a preferred example in the above case, the third information and the fifth information include the same contents. For example, the third information and the fifth information both include at least one of the identifier of the target AF or the portion of the identifier of the target AF, or both include the indication information used to determine the identifier-related information of the target AF, or both include at least one of the identifier of the service provider to which the target AF belongs or the portion of the identifier of the service provider to which the target AF belongs, which ensures that the identifier-related information of the target AF used by the first terminal device and the access network device is the same.

It should be noted that the devices that the first core network device is capable of being connected to or managing are not limited to the above first terminal device, and the first core network device may perform the same processing with each of the one or more terminal devices associated with the target AF as the processing performed by the first core network device with the first terminal device, which is not described any further. Additionally, the AFs connected to or corresponding to the first core network device are not limited to the target AF, and the first core network device may perform the same processing with each of the one or more devices associated with other AFs other than the target AF in the AFs as the processing performed by the first core network device with the first terminal device, which is also not described any further. Additionally, the first terminal device may also be a terminal device associated with another AFs, and the first terminal device acquires the identifier-related information of the AF associated with the first terminal device itself (i.e., the another AF) based on the above implementation, the details of which are not described any further.

In an example, the first core network device transmits indication information to the access network device subsequent to transmitting the fifth information to the first terminal device, and in this case, the first core network device does not transmit the third information to the access network device. Alternatively, the first core network device transmits the indication information to the access network device subsequent to transmitting the fifth information to the first terminal device and transmitting the third information to the access network device. Accordingly, the processing performed by the access network device includes: transmitting the first information in a case where the access network device receives the indication information from the first core network device. The specific processing that the first core network device transmits the indication information to the access network device is the same as that described above, which is not described any further. In this example, the indication information may be used merely to instruct the access network device to transmit the first information but the indication information does not carry other information. Alternatively, the indication information may be used to instruct the access network device to transmit the first information and the indication information further includes related information of the target AF.

In another example, subsequent to transmitting the fifth information to the first terminal device or subsequent to transmitting the fifth information to the first terminal device and transmitting the third information to the access network device, the first core network device does not transmit the indication information to the access network device. In this example, the processing performed by the access network device includes: transmitting the first information at a predefined time. The description of the predefined time is the same as that described in the above embodiment, which is not described any further.

In some embodiments, the process that the first terminal device receives the first information includes: receiving the first information from the access network device. Subsequent to receiving the first information by the first terminal device, the method further includes: reporting data to the access network device in a case where the first terminal device determines, based on the related information of the target AF, that the first terminal device is a terminal device associated with the target AF.

For example, the process that the first terminal device reports data to the access network device in a case where the first terminal device determines, based on the related information of the target AF, that the first terminal device is a terminal device associated with the target AF includes: acquiring the related information of the target AF from the first information; judging whether related information of an AF associated with the first terminal device itself matches the related information of the target AF; determining that the first terminal device is a terminal device associated with the target AF in a case where they match each other, and reporting data to the access network device. Additionally, the method further includes: determining that the first terminal device is not any one of the one or more terminal devices associated with the target AF in a case where they do not match each other.

The process that the first terminal device judges whether the related information of the AF associated with the first terminal device itself matches the related information of the target AF includes one of: judging whether an identifier of the AF associated with the first terminal device itself matches the identifier of the target AF in a case where the related information of the target AF is an identifier of the target AF; judging whether an identifier of a service provider to which the AF associated with the first terminal device itself belongs matches an identifier of a service provider to which the target AF belongs in a case where the related information of the target AF is the identifier of the service provider to which the target AF belongs; or judging whether identifier-related information of the AF associated with the first terminal device itself matches the identifier-related information of the target AF in a case where the related information of the target AF is identifier-related information of the target AF. How the first terminal device acquires the identifier-related information of the AF associated with the first terminal device itself has been described in the above embodiments, which is not repeated any further herein.

Exemplarily, the first information is carried in an RF signal. Accordingly, the process that the first terminal device receives the first information includes: receiving the RF signal from the access network device, wherein the RF signal carries the first information. Subsequent to receiving the first information, the first terminal device acquires the related information of the target AF from the first information, judges whether the related information of the AF associated with the first terminal device itself matches the related information of the target AF, determines that the first terminal device is a terminal device associated with the target AF in a case where they match with each other; and transmits a reflected signal to the access network device in response to the RF signal, wherein the RF signal includes the data reported by the first terminal device. The first terminal device may acquire data prior to receiving the first information or subsequent to receiving the first information, which is not limited in the embodiments of the present disclosure.

It should also be noted that the first terminal device may be any one of the devices managed or covered by the access network device, and the access network device may perform the same processing with other devices in the devices managed or covered by the access network device as the processing performed by the access network device with the first terminal device. For example, prior to transmitting the first information, the access network device transmits second information to a second terminal device, wherein the second terminal device is one of the devices covered or managed by the access network device, and the second terminal device is different from the first terminal device. Then, the access network device transmits the first information. Accordingly, after receiving the first information from the access network device, the second terminal device acquires the related information of the target AF from the first information, judges whether the related information of the AF associated with the second terminal device itself matches the related information of the target AF, determines that the second terminal device is a terminal device associated with the target AF in a case where they match each other, and reports data to the access network device.

In some embodiments, subsequent to transmitting the first information by the access network device, the method further includes: receiving, by the access network device, data reported by each of the one or more terminal devices associated with the target AF; and transmitting, by the access network device, the data reported by the each of the one or more terminal devices to the target AF. The process that the access network device transmits the data reported by the each of the one or more terminal devices to the target AF includes: transmitting to the target AF the data reported by the each of the one or more terminal devices via a first core network device. Accordingly, subsequent to transmitting the indication information by the first core network device, the method further includes: forwarding, by the first core network device, the data reported by the each of the one or more terminal devices to the target AF, wherein the data is transmitted from the access network device to the first core network device.

The first core network device forwards the data reported by the each of the one or more terminal devices to the target AF refers to that the first core network device directly transmits the data reported by the each of the one or more terminal devices to the target AF, or the first core network device transmits the data reported by the each of the one or more terminal devices to the target AF via at least one of a second core network device or a third core network device.

Referring to FIG. 8, the above solution is illustratively described by taking an example where the access network device is a gNB, the one or more terminal devices associated with the target AF are two devices, respectively Device 1 and Device 2, wherein Device 1 is the first terminal device in the above embodiment, and the target AF is AF 1. The solution includes the following processes.

In process 801, the gNB transmits first information, wherein the first information includes related information of AF 1, and the first information is used to trigger each of one or more terminal devices associated with AF 1 to report data.

In process 802, the gNB receives the data reported by Device 1 and the data reported by Device 2.

Prior to process 802, Device 1 and Device 2 judge whether to report data or not. Taking Device 1 as an example, Device 1 receives the first information from the gNB, and reports data to the gNB in a case where Device 1 determines, based on the related information of AF 1, that Device 1 is a terminal device associated with AF 1.

In process 803, the gNB transmits the data reported by Device 1 and the data reported by Device 2 to AF 1 via a 5GC.

The 5GC includes the first core network device, such as an AMF. In addition, the 5GC further includes at least one of the second core network device or the third core network device in addition to the first core network device. The possible core network devices covered by the SGC are not elaborated herein.

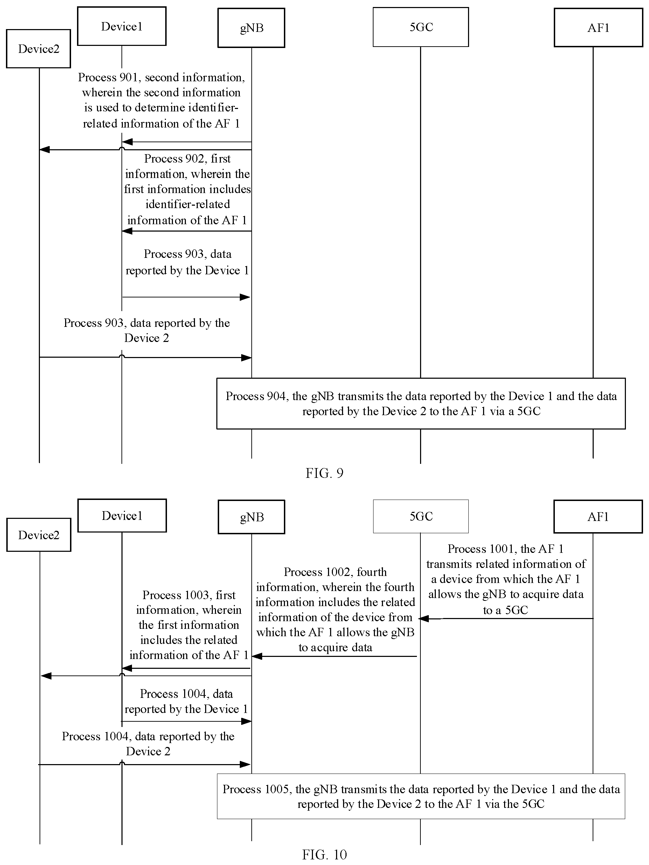

Referring to FIG. 9, the above solution is illustratively described by taking an example where the access network device is a gNB, the one or more terminal devices associated with the target AF are two devices, respectively Device 1 and Device 2, wherein Device 1 is the first terminal device in the above embodiment, and the target AF is AF 1. The solution includes the following processes.

In process 901, the gNB transmits second information to Device 1 and Device 2, wherein the second information is used to determine identifier-related information of the AF 1.

In this example, the second information is carried in a broadcast message. Certainly, the second information may also be carried in dedicated messages corresponding to Device 1 and Device 2. For example, when the gNB transmits the second information to Device 1, the second information is carried in any one of an RRC message, a MAC CE, or DCI of Device 1, the details of which have been elaborated in the above embodiments and are not described any further.

The contents of the second information are the same as those described in the above embodiments, which are not repeated any further.

In this process, the gNB generates and transmits the second information; or the gNB receives the third information from the AMF (i.e., the first core network device), determines the identifier-related information of the target AF based on the third information, and generates and transmits the second information. The details of the two processes performed by the gNB are the same as those described in the above embodiments, which are not described any further.

In process 902, the gNB transmits first information, wherein the first information includes identifier-related information of AF 1, and the first information is used to trigger each of one or more terminal devices associated with AF 1 to report data.

In an example, the first information includes identifier-related information of AF 1. It should be understood that in other examples, the first information includes either the identifier of AF 1 or the identifier of the service provider to which AF 1 belongs. The possible cases are not elaborated in the present example.

The process that the gNB transmits the first information includes: transmitting the first information at a predefined time; or transmitting the first information in a case where the gNB receives indication information from the AMF. The indication information includes the third information, or the indication information and the third information are transmitted respectively, both of which have been described in the above embodiments, and are not repeated any further.

In process 903, the gNB receives the data reported by Device 1 and the data reported by Device 2.

In process 904, the gNB transmits the data reported by Device 1 and the data reported by Device 2 to the AF 1 via a 5GC.

The processing performed by Device 1 and Device 2 in processes 903 and 904 and the processing that may be performed by the gNB are the same as those described in the above embodiments, which are not described any further. The 5GC includes an AMF (i.e., the first core network device), and may also include at least one of an SMF (i.e., the second core network device) or an NEF (i.e., the third core network device). The 5GC may also include other core network devices, which are not elaborated herein.

In some embodiments, prior to transmitting the first information, the access network device further receives fourth information, wherein the fourth information includes related information of a device from which the target AF allows the access network device to acquire data, and determines, based on the fourth information, one or more terminal devices from which the target AF allows the access network device to acquire data.

For example, the process that the access network device receives the fourth information includes: receiving the fourth information from the first core network device. Accordingly, the processing performed by the first core network device includes: transmitting the fourth information to the access network device.

In an example, the first core network device is directly connected to the target AF. In this example, the first core network device receives the related information of the device from which the target AF allows the access network device to acquire data, and then the first core network device transmits, by carrying the related information of the device from which the target AF allows the access network device to acquire data in the fourth information, the related information of the device to the access network device.

In another example, the first core network device is not connected to the target AF. In this example, the first core network device receives the fourth information from at least one of the second core network device or the third core network device. For example, the first core network device receives the fourth information from the second core network device. Accordingly, the processing performed by the second core network device includes: receiving, from the target AF, the related information of the device from which the target AF allows the access network device to acquire data; and transmitting, by carrying the related information of the device from which the target AF allows the access network device to acquire data in the fourth information, the related information to the access network device via the first core network device. For another example, the first core network device receives the fourth information from the third core network device. Accordingly, the processing performed by the third core network device includes: receiving, from the target AF, the related information of the device from which the target AF allows the access network device to acquire data; and transmitting, by carrying the related information of the device from which the target AF allows the access network device to acquire data in the fourth information, the related information to the access network device via the first core network device. It is understandable that the above are merely illustrative examples, and in actual practice, the first core network device may also receive the fourth information from other core network devices, which is not elaborated herein.

In some embodiments, the indication information includes the fourth information, that is, the fourth information is included in the indication information.

In a case, the indication information includes the fourth information and the third information. Accordingly, subsequent to receiving the indication information, the processing performed by the access network device includes: determining, based on the fourth information, one or more terminal devices from which the target AF allows the access network device to acquire data; determining the identifier-related information of the target AF based on the third information, and transmitting the second information; and transmitting the first information.

In another case, the indication information merely includes the fourth information, or the indication information includes the fourth information and the related information of the target AF. In this case, the first core network device first transmits fifth information to the first terminal device, or the first core network device first transmits third information to the access network device and transmits the fifth information to the first terminal device. Accordingly, subsequent to receiving the indication information, the access network device determines, based on fourth information, one or more terminal devices from which the target AF allows the access network device to acquire data, and transmits the first information.

In some embodiments, the fourth information and the indication information are transmitted, respectively. In this case, the fourth information is transmitted prior to the indication information. The fourth information is transmitted when the related information of the device from which the target AF allows the access network device to acquire data changes, and the indication information is transmitted multiple times based on actual situations.

In a case, the indication information includes the third information. Accordingly, subsequent to receiving the indication information, the processing performed by the access network device includes: determining the identifier-related information of the target AF based on the third information, and transmitting the second information; and transmitting the first information.

In another case, the indication information may be used merely to instruct the access network device to transmit the first information, or the indication information may be used to instruct the access network device to transmit the first information and the indication information includes the related information of the target AF. In this case, the first core network device first transmits fifth information to the first terminal device and then transmits the indication information to the access network device; or the first core network device first transmits the third information to the access network device and transmits the fifth information to the first terminal device, and then the first core network device transmits the indication information to the access network device. Accordingly, subsequent to receiving the indication information, the access network device transmits the first information.

In some embodiments, the first core network device transmits the fourth information but does not transmit the indication information. In this case, the access network device transmits the first information at any moment after receiving the fourth information. For example, the access network device transmits the first information at a predefined time. The details of the predefined time are the same as those described in the above embodiment, which are not described any further. It is understandable that in this case, the first core network device may still transmit the third information to the access network device and/or transmit the fifth information to the first terminal device, but the first core network device does not transmit the indication information. Accordingly, the access network device may still receive the third information before transmitting the first information, but the access network device is not instructed by the indication information to transmit the first information.

The related information of the device from which the target AF allows the access network device to acquire data includes at least one of identifier-related information of the device from which the target AF allows the access network device to acquire data or parameter information of the device from which the target AF allows the access network device to acquire data.

The identifier-related information of the device from which the target AF allows the access network device to acquire data may be portion of the identifier of the device from which the target AF allows the access network device to acquire data. For example, the identifier of any device from which the target AF allows the access network device to acquire data includes a plurality of numbers and/or characters, and the identifier-related information of the device from which the target AF allows the access network device to acquire data may be the same numbers and/or the same characters at the same position in the identifiers of a plurality of devices from which the target AF allows the access network device to acquire data. For example, assuming that the identifier of device A from which the target AF allows the access network device to acquire data contains 32 numbers, and the first 4 numbers in the identifiers of all devices from which the target AF allows the access network device to acquire data are respectively the same, then the identifier-related information of the device from which the target AF allows the access network device to acquire data merely includes the first 4 numbers in the identifier. It is understandable that this is merely an illustrative example, and in actual practice, the identifier-related information of the device from which the target AF allows the access network device to acquire data is not limited to first numbers and/or characters in the identifier but may be last numbers and/or characters in the identifier, which is not limited herein.

The parameter information of the device from which the target AF allows the access network device to acquire data includes at least one of: a signal frequency of the device from which the target AF allows the access network device to acquire data, a signal waveform of the device from which the target AF allows the access network device to acquire data, a data acquisition time for the device from which the target AF allows the access network device to acquire data, or a location of the device from which the target AF allows the access network device to acquire data.

The signal frequency of the device from which the target AF allows the access network device to acquire data includes at least one of: one or more signal transmission frequency points of the device from which the target AF allows the access network device to acquire data, or one or more signal transmission frequency bands of the device from which the target AF allows the access network device to acquire data.

The signal waveform of the device from which the target AF allows the access network device to acquire data is configured based on actual situations. The signal waveform includes at least one of a triangular wave, a rectangular wave, a sine wave, a sawtooth wave, or a pulse wave.

The data acquisition time for the device from which the target AF allows the access network device to acquire data is predefined based on actual needs, for example, the data acquisition time for the device from which the target AF allows the access network device to acquire data includes one or more time periods, which include at least one of: 10 a.m. to 12 p.m., 6 p.m. to 8 p.m., 10 p.m. to 12 a.m., or the like, which are merely illustrative descriptions and do not constitute a limitation on the data acquisition time.

The location of the device from which the target AF allows the access network device to acquire data includes a geographic location or cell location of the device from which the target AF allows the access network device to acquire data. The geographic location may be represented by longitude and latitude, and the cell location may be represented by a cell identifier.

The process that the access network device determines, based on the fourth information, one or more terminal devices from which the target AF allows the access network device to acquire data includes: transmitting a carrier signal, receiving related information of each of one or more candidate terminal devices; and determining, based on the related information of each of one or more candidate terminal devices, the one or more terminal devices from which the target AF allows the access network device to acquire data, wherein related information of the one or more terminal devices match the related information of the device from which the target AF allows the access network device to acquire data in the fourth information. The related information of each candidate terminal device includes at least one of: an identifier of each candidate terminal device or a parameter of each candidate terminal device. The parameter of each candidate terminal device includes at least one of: a signal frequency of each candidate terminal device, a signal waveform of each candidate terminal device, a data acquisition time of each candidate terminal device, or a location of each candidate terminal device. That is, the access network device determines, based on the fourth information, the one or more terminal devices from which the target AF allows the access network device to acquire data within the coverage of the access network device itself.

In this implementation, the processing that the first terminal device receives the first information, and the first terminal device reports data to the access network device in a case where the first terminal device determines, based on the related information of the target AF, that the first terminal device is a terminal device associated with the target AF are similar to those described in the above embodiments, which are not described any further.

This implementation differs from the above implementation in that subsequent to transmitting the first information by the access network device, the method further includes: receiving, by the access network device, data reported by each of one or more terminal devices associated with the target AF; and transmitting to the target AF, by the access network device, data reported by each of one or more terminal devices from which the target AF allows the access network device to acquire data.

It should be noted that the one or more terminal devices associated with the target AF may be completely the same as or partially different from the one or more terminal devices from which the target AF allows the access network device to acquire data. For example, the one or more terminal devices associated with the target AF include the one or more terminal devices from which the target AF allows the access network device to acquire data. This is because although a large number of terminal devices may be associated with the target AF, the target AF may only need to acquire the data reported by some of the terminal devices this time. In this case, the target AF indicates the access network device by transmitting the fourth information, such that the access network device determines the terminal devices from which the target AF allows the access network device to acquire data among the terminal devices associated with the target AF.

Prior to transmitting to the target AF, by the access network device, the data reported by each of the one or more terminal devices from which the target AF allows the access network device to acquire data, the method further includes: selecting, by the access network device, the one or more terminal devices from which the target AF allows the access network device to acquire data among the one or more terminal devices associated with the target AF. The process that the access network device selects the one or more terminal devices from which the target AF allows the access network device to acquire data among the one or more terminal devices associated with the target AF includes: judging whether an i^{th} terminal device of the one or more terminal devices associated with the target AF is the one or more terminal devices from which the target AF allows the access network device to acquire data; and taking the i^{th} terminal device as one of the one or more terminal devices from which the target AF allows the access network device to acquire data in a case where the i^{th} terminal device of the one or more terminal devices associated with the target AF is the one or more terminal devices from which the target AF allows the access network device to acquire data; otherwise, deleting or discarding the data reported by the i^{th} terminal device. Here, i is a positive integer, and the i^{th} terminal device is any one of the one or more terminal devices associated with the target AF. The processing with respect to each of the one of the one or more terminal devices associated with the target AF is the same as the processing with respect to the i^{th} terminal device, which are not described any further.

The process that the access network device transmits to the target AF the data reported by each of the one or more terminal devices from which the target AF allows the access network device to acquire data includes: transmitting to the target AF, via the first core network device, the data reported by each of the one or more terminal devices from which the target AF allows the access network device to acquire data. Accordingly, subsequent to transmitting the indication information by the first core network device, the method further includes: forwarding to the target AF, by the first core network device, the data reported by each of the one or more terminal devices from which the target AF allows the access network device to acquire data, wherein the data is transmitted from the access network device to the first core network device.

The process that the first core network device forwards to the target AF the data reported by each of the one or more terminal devices from which the target AF allows the access network device to acquire data includes: directly transmitting to the target AF the data reported by each of the one or more terminal devices from which the target AF allows the access network device to acquire data; or transmitting to the target AF, via at least one of the second core network device or the third core network device, the data reported by each of the one or more terminal devices from which the target AF allows the access network device to acquire data.

Referring to FIG. 10, the above solution is illustratively described by taking an example where the access network device is a gNB, the one or more terminal devices associated with the target AF are two devices, respectively Device 1 and Device 2, wherein Device 1 is the first terminal device in the above embodiments, and the target AF is AF 1. The solution includes the following processes.

In process 1001, the AF 1 transmits related information of a device from which AF 1 allows the gNB to acquire data to a 5GC.

That is, AF 1 configures the gNB via the SGC to authorize the gNB to collect the related information of the device from which AF 1 allows the gNB to acquire data. The service provider to which AF 1 belongs may be an operator or a third-party service provider. The related information of the device from which AF 1 allows the gNB to acquire data includes the same contents as described above, which are not repeated any further.

In process 1002, the SGC transmits fourth information to the gNB, wherein the fourth information includes the related information of the device from which AF 1 allows the gNB to acquire data.

The 5GC may include the first core network device, which may be an AMF or a core network device associated with AF 1. The SGC may further include at least one of the second core network device or the third core network device. The second core network device may be an SMF, and the third core network device may be an NEF. The specific processes performed by the first core network device, the second core network device and the third core network device have been described in the above embodiments, which are not described any further.

For example, the process that the SGC transmits the fourth information to the gNB includes: transmitting, by the AMF, the fourth information to the gNB. In an example, the fourth information is included in the indication information, that is, the AMF transmits the indication information to the gNB, wherein the indication information includes the fourth information. In another example, the fourth information and the indication information are transmitted respectively. For example, subsequent to transmitting the fourth information, the AMF transmits the indication information to the gNB. In still another example, the AMF does not transmit the indication information to the gNB.

In process 1003, the gNB transmits the first information, wherein the first information includes the related information of AF 1, and the first information is used to trigger each of one or more terminal devices associated with AF 1 to report data.

Prior to process 1003, the gNB determines, based on the fourth information, one or more terminal devices from which AF 1 allows the gNB to acquire data within the coverage of the gNB itself, the details of which are the same as those provided in the above embodiments.

In an example, the fourth information is included in the indication information, and in this case, the process that the gNB transmits the first information includes: determining, based on the fourth information included in the indication information, the one or more terminal devices from which AF 1 allows the gNB to acquire data within the coverage of the gNB itself in a case where the gNB receives the indication information from the AMF, and transmitting the first information. In an example, the fourth information and the indication information are transmitted respectively. For example, the AMF transmits the indication information to the gNB subsequent to transmitting the fourth information to the gNB. In this case, the process that the gNB transmits the first information includes: determining, based on the fourth information, the one or more terminal devices from which AF 1 allows the gNB to acquire data within the coverage of the gNB itself in a case where the gNB receives the fourth information from the AMF; and transmitting the first information in a case where the gNB receives the indication information from the AMF. In another example, the AMF does not transmit the indication information to the gNB. In this case, the process that the gNB transmits the first information includes: determining, based on the fourth information, the one or more terminal devices from which AF 1 allows the gNB to acquire data within the coverage of the gNB itself in a case where the gNB receives the fourth information from the AMF; and transmitting the first information at a predefined time.

In process 1004, the gNB receives the data reported by Device 1 and the data reported by Device 2.

Prior to process 1004, Device 1 and Device 2 judge whether to report data or not. Taking Device 1 as an example, Device 1 receives the first information from the gNB, and Device 1 reports date to the gNB in a case where Device 1 determines, based on the related information of AF 1, that Device 1 is a terminal device associated with AF 1.

It should also be noted that, in process 1004, the gNB may receive the data reported by one or more terminal devices associated with AF 1.

In process 1005, the gNB transmits the data reported by Device 1 and the data reported by Device 2 to AF 1 via the 5GC.

For example, the gNB determines the one or more terminal devices from which AF 1 allows the gNB to acquire data among the one or more terminal devices associated with AF 1, and the access network device transmits data reported by each of the one or more terminal devices from which AF 1 allows the gNB to acquire data to AF 1 via the 5GC. The one or more terminal devices associated with AF 1 include the one or more terminal devices from which AF 1 allows the gNB to acquire data, that is, the number of the one or more terminal devices associated with AF 1 is greater than the number of the one or more terminal devices from which AF 1 allows the gNB to acquire data. In this example, Device 1 and Device 2 are the one or more terminal devices associated with the AF 1 and are also the one or more terminal devices from which AF 1 allows the gNB to acquire data.

It is understandable that the gNB may perform the same processing with the terminal device associated with each of all AFs as the processing performed by the gNB with AF 1, which are not illustrated in FIG. 10 for brevity.

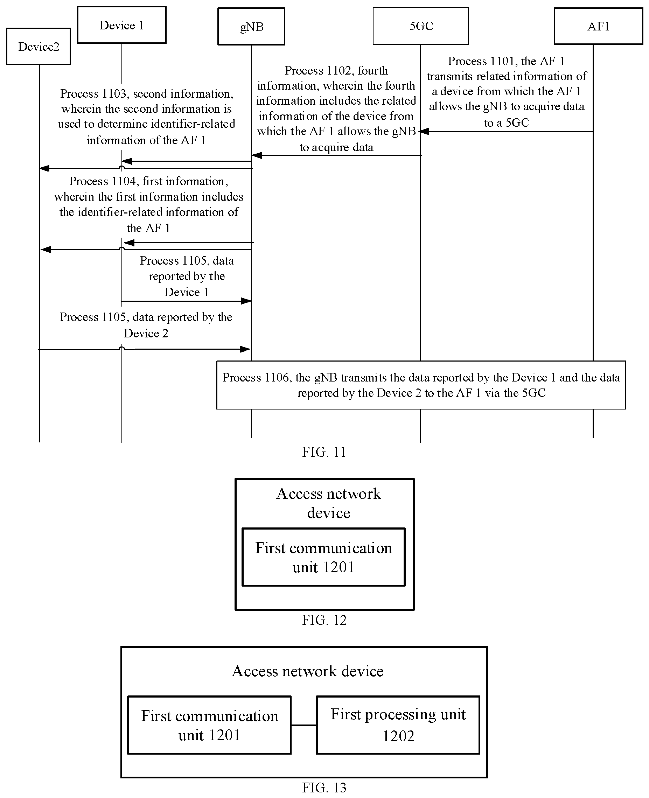

On the basis of FIG. 10 and referring to FIG. 11, the above solution is illustratively described by an example where the access network device is a gNB, the one or more terminal devices associated with the target AF are two devices, respectively Device 1 and Device 2, wherein Device 1 is the first terminal device in the above embodiment, and the target AF is AF 1. The solution includes the following processes.

In process 1101, AF 1 transmits related information of a device from which AF 1 allows the gNB to acquire data to a 5GC.

In process 1102, the 5GC transmits fourth information to the gNB, wherein the fourth information includes the related information of the device from which the AF 1 allows the gNB to acquire data.

The details of processes 1101 and 1102 are the same as the details of processes 1001 and 1002, which are not described any further.

In process 1103, the gNB transmits second information to Device 1 and Device 2, wherein the second information is used to determine identifier-related information of AF 1.

The details of process 1103 are the same as the details of process 901 in the above example, which are not described any further.

In process 1104, the gNB transmits first information, wherein the first information includes the identifier-related information of AF 1, and the first information is used to trigger each of one or more terminal devices associated with AF 1 to report data.

Prior to process 1104, the gNB determines, based on the fourth information, one or more terminal devices from which AF 1 allows the gNB to acquire data within the coverage of the gNB itself, the details of which are the same as process 1003 in the above embodiments.

In process 1105, the gNB receives the data reported by Device 1 and the data reported by Device 2.

In process 1106, the gNB transmits the data reported by Device 1 and the data reported by Device 2 to AF 1 via the 5GC.

The processing performed by the gNB in processes 1105 and 1106 and the processing performed by Device 1 and Device 2 are the same as those in processes 1004 and 1005, which are not described any further.

In the above solution, the access network device transmits the first information including the related information of the target AF, which triggers one or more terminal devices associated with the target AF to report data. In this way, one or more terminal devices associated with the target AF are efficiently determined from all terminal devices covered by the access network device based on only one piece of information, and only data from the terminal device associated with the target AF is reported to the target AF, such that the processing efficiency is improved. In addition, data of the terminal device associated with the target AF is acquired by efficiently filtering based on only one piece of information, which avoids multiple interactions with the terminal device to achieve the filtering effect, such that the air interface signaling interactions are reduced.

FIG. 12 illustrates a schematic structural diagram of an access network device according to some embodiments of the present disclosure.

The access network device includes a first communication unit 1201, configured to transmit first information, wherein the first information includes related information of a target AF, and the first information is used to trigger each of one or more terminal devices associated with the target AF to report data.

The related information of the target AF includes one of: an identifier of the target AF, an identifier of a service provider to which the target AF belongs, or identifier-related information of the target AF.

The identifier-related information of the target AF includes one of: a portion of the identifier of the target AF or a portion of the identifier of the service provider to which the target AF belongs.

The first communication unit is configured to transmit second information prior to transmitting the first information, wherein the second information is used to determine identifier-related information of the target AF.

The second information includes one of: at least one of an identifier of the target AF or a portion of an identifier of the target AF; at least one of an identifier of a service provider to which the target AF belongs or a portion of an identifier of a service provider to which the target AF belongs; or indication information used to determine the identifier-related information of the target AF.

The second information is carried in one of: a broadcast message, an RRC message, a MAC CE, or DCI.

The first communication unit is configured to receive third information from a first core network device prior to transmitting the first information, wherein the third information is used to determine identifier-related information of the target AF.

The first communication unit is configured to receive indication information from the first core network device, wherein the indication information includes the third information, and the indication information is used to instruct the access network device to transmit the first information.

The third information includes one of: at least one of an identifier of the target AF or a portion of an identifier of the target AF; at least one of an identifier of a service provider to which the target AF belongs or a portion of an identifier of a service provider to which the target AF belongs; or indication information used to determine the identifier-related information of the target AF.

The indication information used to determine the identifier-related information of the target AF includes one of: a first-type indicator value, used to indicate that first M bits of the identifier of the target AF serve as the identifier-related information of the target AF, M being a positive integer; a second-type indicator value, used to indicate that last N bits of the identifier of the target AF serve as the identifier-related information of the target AF, N being a positive integer; a third-type indicator value, used to indicate that first K bits of the identifier of the service provider to which the target AF belongs serve as the identifier-related information of the target AF, K being a positive integer; or a fourth-type indicator value, used to indicate that last Q bits of the identifier of the service provider to which the target AF belongs serve as the identifier-related information of the target AF, Q being a positive integer.

The first communication unit is configured to receive indication information from a first core network device prior to transmitting the first information, wherein the indication information is used to instruct the access network device to transmit the first information.

The first communication unit is configured to receive the data reported by the each of the one or more terminal devices associated with the target AF subsequent to transmitting the first information; and transmit the data reported by the each of the one or more terminal devices to the target AF.

The first communication unit is configured to transmit to the target AF the data reported by the each of the one or more terminal devices via a first core network device.

On the basis of FIG. 12, as illustrated in FIG. 13, the access network device further includes:
a first processing unit 1202, configured to determine, based on fourth information, one or more terminal devices from which the target AF allows the access network device to acquire data; wherein the first communication unit 1201 is configured to receive the fourth information, wherein the fourth information comprises related information of a device from which the target AF allows the access network device to acquire data.

The related information of the device from which the target AF allows the access network device to acquire data includes at least one of: identifier-related information of the device from which the target AF allows the access network device to acquire data or parameter information of the device from which the target AF allows the access network device to acquire data.

The parameter information of the device from which the target AF allows the access network device to acquire data includes at least one of: a signal frequency of the device from which the target AF allows the access network device to acquire data, a signal waveform of the device from which the target AF allows the access network device to acquire data, a data acquisition time for the device from which the target AF allows the access network device to acquire data, or a location of the device from which the target AF allows the access network device to acquire data.

The first communication unit is configured to: receive the data reported by the each of the one or more terminal devices associated with the target AF; and transmit to the target AF data reported by each of the one or more terminal devices from which the target AF allows the access network device to acquire data.

The terminal device is a zero-power terminal.

The access network device in the embodiments of the present disclosure can achieve the functions of the access network device in the information verification method embodiments described above. For the corresponding processes, functions, implementations and beneficial effects of various modules (submodules, units, components, etc.) in the access network device, reference may be made to the corresponding descriptions in the above method embodiments, which are not described any further. It should be noted that, in the embodiments of the present disclosure, the described functions of the various modules (submodules, units, components, or the like) in the access network device may be achieved by different modules (submodules, units, components, or the like) or by the same module (submodule, unit, component, or the like).

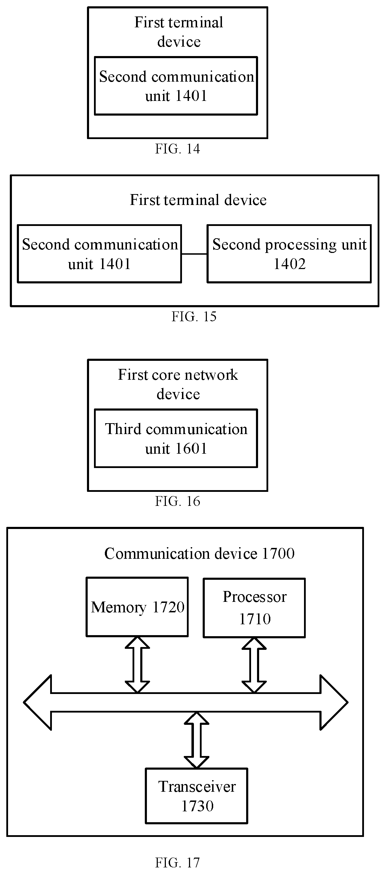

FIG. 14 illustrates a schematic structural diagram of a first terminal device according to some embodiments of the present disclosure.

The first terminal device includes a second communication unit 1401, configured to receive first information, wherein the first information includes related information of a target AF, and the first information is used to trigger each of one or more terminal devices associated with the target AF to report data.

The second communication unit is configured to receive the first information from an access network device.

On the basis of FIG. 14, referring to FIG. 15, the first terminal device further includes:
a second processing unit 1402, configured to control the second communication unit to report data to an access network device in a case where the second processing unit determines, based on the related information of the target AF, that the first terminal device is a terminal device associated with the target AF;
the second communication unit 1401 is configured to report data to the access network device.

The related information of the target AF includes one of: an identifier of the target AF, an identifier of a service provider to which the target AF belongs, or identifier-related information of the target AF.

The identifier-related information of the target AF includes one of: a portion of the identifier of the target AF or a portion of the identifier of the service provider to which the target AF belongs.

The second communication unit is configured to receive second information from an access network device prior to receiving the first information, wherein the second information is used to determine the identifier-related information of the target AF.

The second information includes one of: at least one of the identifier of the target AF or the portion of the identifier of the target AF; at least one of the identifier of the service provider to which the target AF belongs or the portion of the identifier of the service provider to which the target AF belongs; or indication information used to determine the identifier-related information of the target AF.

The second information is carried in one of: a broadcast message, an RRC message, a MAC CE, or DCI.

The second communication unit is configured to receive fifth information from a first core network device prior to receiving the first information, wherein the fifth information is used to determine the identifier-related information of the target AF.

The fifth information includes one of: at least one of the identifier of the target AF or the portion of the identifier of the target AF; at least one of the identifier of the service provider to which the target AF belongs or the portion of the identifier of the service provider to which the target AF belongs; or indication information used to determine the identifier-related information of the target AF.

The fifth information is carried in a NAS message.

The NAS message is one of a registration accept message or a configuration update message.

The indication information used to determine the identifier-related information of the target AF includes one of: a first-type indicator value, used to indicate that first M bits of the identifier of the target AF serve as the identifier-related information of the target AF, M being a positive integer; a second-type indicator value, used to indicate that last N bits of the identifier of the target AF serve as the identifier-related information of the target AF, N being a positive integer; a third-type indicator value, used to indicate that first K bits of the identifier of the service provider to which the target AF belongs serve as the identifier-related information of the target AF, K being a positive integer; or a fourth-type indicator value, used to indicate that last Q bits of the identifier of the service provider to which the target AF belongs serve as the identifier-related information of the target AF, Q being a positive integer.

The terminal device is a zero-power terminal.

The first terminal device in the embodiments of the present disclosure can achieve the functions of the first terminal device in the information verification method embodiments described above. For the corresponding processes, functions, implementations and beneficial effects of various modules (submodules, units, components, etc.) in the first terminal device, reference may be made to the corresponding descriptions in the above method embodiments, which are not described any further. It should be noted that, in the embodiments of the present disclosure, the described functions of the various modules (submodules, units, components, or the like) in the first terminal device may be achieved by different modules (submodules, units, components, or the like) or by the same module (submodule, unit, component, or the like).

FIG. 16 illustrates a schematic structural diagram of a first core network device according to some embodiments of the present disclosure.

The first core network device includes a third communication unit 1601, configured to transmit indication information, wherein the indication information is used to instruct an access network device to transmit first information, the first information including related information of a target AF, and the first information being used to trigger each of one or more terminal devices associated with the target AF to report data.

The related information of the target AF includes one of: an identifier of the target AF, an identifier of a service provider to which the target AF belongs, or identifier-related information of the target AF.

The identifier-related information of the target AF includes one of: a portion of the identifier of the target AF or a portion of the identifier of the service provider to which the target AF belongs.

The indication information includes third information, wherein the third information is used to determine identifier-related information of the target AF.

The third communication unit is configured to transmit third information to the access network device prior to transmitting the indication information, wherein the third information is used to determine the related information of the target AF.

The third information includes one of: at least one of an identifier of the target AF or a portion of an identifier of the target AF; at least one of an identifier of a service provider to which the target AF belongs or a portion of an identifier of a service provider to which the target AF belongs; or indication information used to determine the identifier-related information of the target AF.

The third communication unit is configured to transmit fifth information to a first terminal device prior to transmitting the indication information, wherein the fifth information is used to determine identifier-related information of the target AF.

The fifth information includes one of: at least one of an identifier of the target AF or a portion of an identifier of the target AF; at least one of an identifier of a service provider to which the target AF belongs or a portion of an identifier of a service provider to which the target AF belongs; or indication information used to determine the identifier-related information of the target AF.

The fifth information is carried in a NAS message.

The NAS message is one of a registration accept message or a configuration update message.

The indication information used to determine the identifier-related information of the target AF includes one of: a first-type indicator value, used to indicate that first M bits of the identifier of the target AF serve as the identifier-related information of the target AF, M being a positive integer; a second-type indicator value, used to indicate that last N bits of the identifier of the target AF serve as the identifier-related information of the target AF, N being a positive integer; a third-type indicator value, used to indicate that first K bits of the identifier of the service provider to which the target AF belongs serve as the identifier-related information of the target AF, K being a positive integer; or a fourth-type indicator value, used to indicate that last Q bits of the identifier of the service provider to which the target AF belongs serve as the identifier-related information of the target AF, Q being a positive integer.

The third communication unit is configured to forward to the target AF the data reported by the each terminal device subsequent to transmitting the indication information, wherein the data is transmitted from the access network device to the first core network device.

The third communication unit is configured to transmit fourth information to the access network device, wherein the fourth information includes related information of a device from which the target AF allows the access network device to acquire data.

The related information of the device from which the target AF allows the access network device to acquire data includes at least one of: identifier-related information of the device from which the target AF allows the access network device to acquire data or parameter information of the device from which the target AF allows the access network device to acquire data.

The parameter information of the device from which the target AF allows the access network device to acquire data includes at least one of: a signal frequency of the device from which the target AF allows the access network device to acquire data, a signal waveform of the device from which the target AF allows the access network device to acquire data, a data acquisition time for the device from which the target AF allows the access network device to acquire data, or a location of the device from which the target AF allows the access network device to acquire data.

The third communication unit is configured to forward to the target AF data reported by each of one or more terminal devices from which the target AF allows the access network device to acquire data subsequent to transmitting the indication information, wherein the data is transmitted from the access network device to the first core network device.

The first core network device in the embodiments of the present disclosure can achieve the functions of the first core network device in the information verification method embodiments described above. For the corresponding processes, functions, implementations and beneficial effects of various modules (submodules, units, components, etc.) in the first core network device, reference may be made to the corresponding descriptions in the above method embodiments, which are not described any further. It should be noted that, in the embodiments of the present disclosure, the described functions of the various modules (submodules, units, components, etc.) in the first core network device may be achieved by different modules (submodules, units, components, etc.) or by the same module (submodule, unit, component, or the like). additionally, the first core network device may further include a third processing unit configured to generate indication information or perform other processing.

FIG. 17 illustrates a schematic structural diagram of a communication device 1700 according to some embodiments of the present disclosure. The communication device 1700 includes a processor 1710. The processor 1710 is configured to load and run at least one computer program from a memory, to cause the communication device 1700 to perform the methods according to the embodiments of the present disclosure.

In some embodiments, the communication device 1700 further includes a memory 1720. The processor 1710 is configured to load and run at least one computer program from the memory 1720, to cause the communication device 1700 to perform the methods according to the embodiments of the present disclosure.

The memory 1720 may be a separate device independent from the processor 1710 or may be integrated within the processor 1710.

In some embodiments, the communication device 1700 further includes a transceiver 1730. The processor 1710 is configured to control the transceiver 1730 to communicate with other communication devices. For example, the processor 1710 is configured to control the transceiver 1730 to transmit information or data to other devices or receive information or data from other devices.

The transceiver 1730 includes a transmitter and a receiver. The transceiver 1730 further includes one or more antennas.

In some embodiments, the communication device 1700 is the access network device according to the embodiments of the present disclosure, and the communication device 1700 implements the corresponding processes performed by the access network device in various methods of the embodiments of the present disclosure. Details are not repeated any further for brevity. In some embodiments, the communication device 1700 is the first terminal device according to the embodiments of the present disclosure, and the communication device 1700 implements the corresponding processes performed by the first terminal device in various methods of the embodiments of the present disclosure. Details are not repeated any further for brevity. In some embodiments, the communication device 1700 is the first core network device according to the embodiments of the present disclosure, and the communication device 1700 implements the corresponding processes performed by the first core network device in various methods of the embodiments of the present disclosure. Details are not repeated any further for brevity.

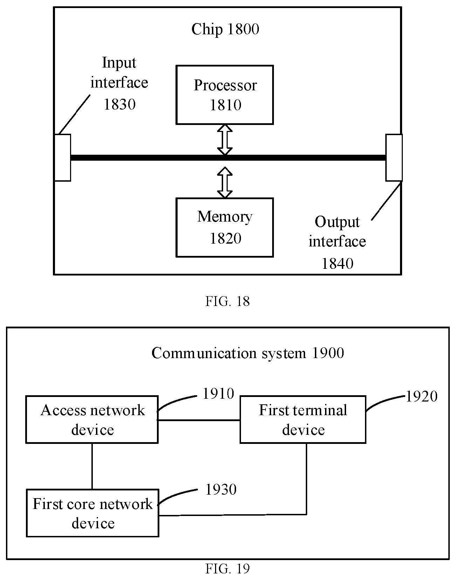

FIG. 18 is a schematic structural diagram of a chip 1800 according to some embodiments of the present disclosure. The chip 1800 includes a processor 1810. The processor 1810 is configured to load and run one or more computer programs stored in a memory, to perform the methods according to the embodiments of the present disclosure.

In some embodiments, the chip 1800 further includes a memory 1820. The processor 1810 is configured to load and run one or more computer programs stored in the memory 1820, to perform the methods performed by the access network device or the first core network device in the embodiments of the present disclosure. The memory 1820 is a separate device independent from the processor 1810, or the memory 1820 is integrated within the processor 1810.

In some embodiments, the chip 1800 further includes an input interface 1830. The processor 1810 is configured to control the input interface 1830 to communicate with other devices or chips. For example, the processor 1810 is configured to control the input interface 1830 to acquire information or data from other devices or chips. In some embodiments, the chip 1800 further includes an output interface 1840. The processor 1810 is configured to control the output interface 1840 to communicate with other devices or chips. For example, the processor 1810 is configured to control the output interface 1840 to output information or data to other devices or chips.

In some embodiments, the chip is applicable to the access network device in the embodiments of the present disclosure, and the chip implements corresponding processes performed by the access network device in various methods of the embodiments of the present disclosure. Details are not repeated any further for brevity. In some embodiments, the chip is applicable to the first terminal device in the embodiments of the present disclosure, and the chip implements corresponding processes performed by the first terminal device in various methods of the embodiments of the present disclosure. Details are not repeated any further for brevity. In some embodiments, the chip is applicable to the first core network device in the embodiments of the present disclosure, and the chip implements corresponding processes performed by the first core network device in various methods of the embodiments of the present disclosure. Details are not repeated any further for brevity.

It is understandable that the chip in the embodiments of the present disclosure is also referred to as a system-level chip, a system chip, a chip system, a system-on-chip, or the like.

The processor mentioned above is a general-purpose processor, a digital signal processor (DSP), a field-programmable gate array (FPGA), an application-specific integrated circuit (ASIC), or other programmable logic device, a transistor logic device, or a discrete hardware component. The general-purpose processor is a microprocessor, or any conventional processor, or the like.

The memory mentioned above is a transitory memory or a non-transitory memory, or the memory includes both the transitory memory and the non-transitory memory. The non-transitory memory is a read-only memory (ROM), a programmable ROM (PROM), an erasable PROM (EPROM), an electrically EPROM (EEPROM), or a flash memory. The transitory memory is a random access memory (RAM).

It is understandable that the memory described above is exemplary but not limited. For example, the memory according to the embodiments of the present disclosure is a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), or a direct rambus RAM (DR RAM). That is, the memory in the embodiments of the present disclosure is intended to include, but is not limited to, these and any other suitable types of memories.

FIG. 19 is a schematic block diagram of a communication system 1900 according to some embodiments of the present disclosure. The communication system 1900 includes an access network device 1910, a first terminal device 1920 and a first core network device 1930. The access network device 1910 implements corresponding functions implemented by the access network device in the above methods. The first terminal device 1920 implements corresponding functions implemented by the first terminal device in the above methods. The first core network device 1930 implements corresponding functions implemented by the first core network device in the above methods.

The embodiments described above are implemented in whole or in part by software, hardware, firm ware or any combination thereof. In a case where the embodiments are implemented by software, the embodiments are implemented in the form of a computer program product in whole or in part. The computer program product includes one or more computer instructions. The one or more computer program instructions, when loaded and executed by a computer, wholly or partially generate the flows or functions according to the embodiments of the disclosure. The computer is a general-purpose computer, a dedicated computer, a computer network, or other programmable device. The one or more computer instructions are stored in a computer-readable storage medium, or transmitted from one computer-readable storage medium to another computer-readable storage medium. For example, the one or more computer instructions are transmitted from a website site, a computer, a server or a data center in a wired (such as a coaxial cable, an optical fiber, a digital subscriber line (DSL)) or wireless (such as infrared, radio, or microwave) fashion to another website site, computer, server or data center. The computer-readable storage medium is any available medium that is accessible by a computer or a data storage device integrated with one or more available mediums, such as a server or a data center. The available medium is a magnetic medium (for example, a floppy disk, a hard disk, and a magnetic tape), an optical medium (for example, a DVD), or a semiconductor medium (for example, a solid state disk (SSD)).

It is understandable that, in various embodiments of the present disclosure, the serial number of each of the above processes does not imply the order of execution, and the order of execution of each of the processes should be determined by its function and inherent logic, without constituting any limitation of the implementation process of the embodiments of the present disclosure.

Those skilled in the art may clearly understand that for the convenience and brevity of description, for the specific operating processes of the systems, apparatuses, and units described above, reference may be made to the corresponding processes in the method embodiments, which are not described any further.

Described above are exemplary embodiments of the present disclosure, but the protection scope of the present disclosure is not limited to these exemplary embodiments. Various variations or substitutions readily conceivable by those skilled in the art within the technical scope disclosed in the present disclosure shall fall within the protection scope of the present disclosure. Therefore, the protection scope of the present disclosure shall be subject to the appended claims.

## Claims

1. A method for communication, performed by an access network device, the method comprising:
transmitting first information, wherein the first information comprises related information of a target application function (AF), and the first information is used to trigger each of one or more terminal devices associated with the target AF to report data.

2. The method according to claim 1, wherein the related information of the target AF comprises one of: an identifier of the target AF, an identifier of a service provider to which the target AF belongs, or identifier-related information of the target AF.

3. The method according to claim 2, wherein the identifier-related information of the target AF comprises one of: a portion of the identifier of the target AF or a portion of the identifier of the service provider to which the target AF belongs.

4. The method according to any one of claims 1 to 3, wherein prior to transmitting the first information, the method further comprises:
transmitting second information, wherein the second information is used to determine identifier-related information of the target AF.

5. The method according to claim 4, wherein the second information comprises one of:
at least one of an identifier of the target AF or a portion of an identifier of the target AF;
at least one of an identifier of a service provider to which the target AF belongs or a portion of an identifier of a service provider to which the target AF belongs; or
indication information used to determine the identifier-related information of the target AF.

6. The method according to claim 4 or 5, wherein the second information is carried in one of: a broadcast message, a radio resource control (RRC) message, a medium access control (MAC) control element (CE), or downlink control information (DCI).

7. The method according to any one of claims 1 to 6, wherein prior to transmitting the first information, the method further comprises:
receiving third information from a first core network device, wherein the third information is used to determine identifier-related information of the target AF.

8. The method according to claim 7, wherein receiving the third information from the first core network device comprises:
receiving indication information from the first core network device, wherein the indication information comprises the third information, and the indication information is used to instruct the access network device to transmit the first information.

9. The method according to claim 7 or 8, wherein the third information comprises one of:
at least one of an identifier of the target AF or a portion of an identifier of the target AF;
at least one of an identifier of a service provider to which the target AF belongs or a portion of an identifier of the service provider to which the target AF belongs; or
indication information used to determine the identifier-related information of the target AF.

10. The method according to claim 5 or 9, wherein the indication information used to determine the identifier-related information of the target AF comprises one of:
a first-type indicator value, used to indicate that first M bits of the identifier of the target AF serve as the identifier-related information of the target AF, M being a positive integer;
a second-type indicator value, used to indicate that last N bits of the identifier of the target AF serve as the identifier-related information of the target AF, N being a positive integer;
a third-type indicator value, used to indicate that first K bits of the identifier of the service provider to which the target AF belongs serve as the identifier-related information of the target AF, K being a positive integer; or
a fourth-type indicator value, used to indicate that last Q bits of the identifier of the service provider to which the target AF belongs serve as the identifier-related information of the target AF, Q being a positive integer.

11. The method according to any one of claims 1 to 7, wherein prior to transmitting the first information, the method further comprises:
receiving indication information from a first core network device, wherein the indication information is used to instruct the access network device to transmit the first information.

12. The method according to any one of claims 1 to 11, wherein subsequent to transmitting the first information, the method further comprises:
receiving the data reported by the each of the one or more terminal devices associated with the target AF; and
transmitting to the target AF the data reported by the each of the one or more terminal devices.

13. The method according to claim 12, wherein transmitting the data reported by the each of the one or more terminal devices to the target AF comprises:
transmitting to the target AF the data reported by the each of the one or more terminal devices via a first core network device.

14. The method according to any one of claims 1 to 11, wherein prior to transmitting the first information, the method further comprises:
receiving fourth information, wherein the fourth information comprises related information of a device from which the target AF allows the access network device to acquire data; and
determining, based on the fourth information, one or more terminal devices from which the target AF allows the access network device to acquire data.

15. The method according to claim 14, wherein the related information of the device from which the target AF allows the access network device to acquire data comprises at least one of: identifier-related information of the device from which the target AF allows the access network device to acquire data or parameter information of the device from which the target AF allows the access network device to acquire data.

16. The method according to claim 15, wherein the parameter information of the device from which the target AF allows the access network device to acquire data comprises at least one of: a signal frequency of the device from which the target AF allows the access network device to acquire data, a signal waveform of the device from which the target AF allows the access network device to acquire data, a data acquisition time for the device from which the target AF allows the access network device to acquire data, or a location of the device from which the target AF allows the access network device to acquire data.

17. The method according to any one of claims 14 to 16, wherein subsequent to transmitting the first information, the method further comprises:
receiving the data reported by the each of the one or more terminal devices associated with the target AF; and
transmitting to the target AF data reported by each of the one or more terminal devices from which the target AF allows the access network device to acquire data.

18. The method according to any one of claims 1 to 17, wherein the terminal device is a zero-power terminal.

19. A method for communication, performed by a first terminal device, the method comprising:
receiving first information, wherein the first information comprises related information of a target application function (AF), and the first information is used to trigger each of one or more terminal devices associated with the target AF to report data.

20. The method according to claim 19, wherein receiving the first information comprises:
receiving the first information from an access network device.

21. The method according to claim 19 or 20, wherein subsequent to receiving the first information, the method further comprises:
reporting data to an access network device in a case where the first terminal device determines, based on the related information of the target AF, that the first terminal device is a terminal device associated with the target AF.

22. The method according to any one of claims 19 to 21, wherein the related information of the target AF comprises one of: an identifier of the target AF, an identifier of a service provider to which the target AF belongs, or identifier-related information of the target AF.

23. The method according to claim 22, wherein the identifier-related information of the target AF comprises one of: a portion of the identifier of the target AF or a portion of the identifier of the service provider to which the target AF belongs.

24. The method according to claim 23, wherein prior to receiving the first information, the method further comprises:
receiving second information from an access network device, wherein the second information is used to determine the identifier-related information of the target AF.

25. The method according to claim 24, wherein the second information comprises one of:
at least one of the identifier of the target AF or the portion of the identifier of the target AF;
at least one of the identifier of the service provider to which the target AF belongs or the portion of the identifier of the service provider to which the target AF belongs; or
indication information used to determine the identifier-related information of the target AF.

26. The method according to claim 24 or 25, wherein the second information is carried in one of: a broadcast message, a radio resource control (RRC) message, a medium access control (MAC) control element (CE), or downlink control information (DCI).

27. The method according to claim 26, wherein prior to receiving the first information, the method further comprises:
receiving fifth information from a first core network device, wherein the fifth information is used to determine the identifier-related information of the target AF.

28. The method according to claim 27, wherein the fifth information comprises one of:
at least one of the identifier of the target AF or the portion of the identifier of the target AF;
at least one of the identifier of the service provider to which the target AF belongs or the portion of the identifier of the service provider to which the target AF belongs; or
indication information used to determine the identifier-related information of the target AF.

29. The method according to claim 27 or 28, wherein the fifth information is carried in a non-access stratum (NAS) message.

30. The method according to claim 29, wherein the NAS message is one of a registration accept message or a configuration update message.

31. The method according to claim 25 or 28, wherein the indication information used to determine the identifier-related information of the target AF comprises one of:
a first-type indicator value, used to indicate that first M bits of the identifier of the target AF serve as the identifier-related information of the target AF, M being a positive integer;
a second-type indicator value, used to indicate that last N bits of the identifier of the target AF serve as the identifier-related information of the target AF, N being a positive integer;
a third-type indicator value, used to indicate that first K bits of the identifier of the service provider to which the target AF belongs serve as the identifier-related information of the target AF, K being a positive integer; or
a fourth-type indicator value, used to indicate that last Q bits of the identifier of the service provider to which the target AF belongs serve as the identifier-related information of the target AF, Q being a positive integer.

32. The method according to any one of claims 19 to 31, wherein the terminal device is a zero-power terminal.

33. A method for communication, performed by a first core network device, the method comprising:
transmitting indication information, wherein the indication information is used to instruct an access network device to transmit first information, the first information comprising related information of a target application function (AF), and the first information being used to trigger each of one or more terminal devices associated with the target AF to report data.

34. The method according to claim 33, wherein the related information of the target AF comprises one of: an identifier of the target AF, an identifier of a service provider to which the target AF belongs, or identifier-related information of the target AF.

35. The method according to claim 34, wherein the identifier-related information of the target AF comprises one of: a portion of the identifier of the target AF or a portion of the identifier of the service provider to which the target AF belongs.

36. The method according to any one of claims 33 to 35, wherein the indication information comprises third information, wherein the third information is used to determine identifier-related information of the target AF.

37. The method according to any one of claims 33 to 35, wherein prior to transmitting the indication information, the method further comprises:
transmitting third information to the access network device, wherein the third information is used to determine the related information of the target AF.

38. The method according to claim 36 or 37, wherein the third information comprises one of:
at least one of an identifier of the target AF or a portion of an identifier of the target AF;
at least one of an identifier of a service provider to which the target AF belongs or a portion of an identifier of a service provider to which the target AF belongs; or
indication information used to determine the identifier-related information of the target AF.

39. The method according to any one of claims 33 to 35 and 37, wherein prior to transmitting the indication information, the method further comprises:
transmitting fifth information to a first terminal device, wherein the fifth information is used to determine identifier-related information of the target AF.

40. The method according to claim 39, wherein the fifth information comprises one of:
at least one of an identifier of the target AF or a portion of an identifier of the target AF;
at least one of an identifier of a service provider to which the target AF belongs or a portion of an identifier of a service provider to which the target AF belongs; or
indication information used to determine the identifier-related information of the target AF.

41. The method according to claim 39 or 40, wherein the fifth information is carried in a non-access stratum (NAS) message.

42. The method according to claim 41, wherein the NAS message is one of a registration accept message or a configuration update message.

43. The method according to claim 38 or 40, wherein the indication information used to determine the identifier-related information of the target AF comprises one of:
a first-type indicator value, used to indicate that first M bits of the identifier of the target AF serve as the identifier-related information of the target AF, M being a positive integer;
a second-type indicator value, used to indicate that last N bits of the identifier of the target AF serve as the identifier-related information of the target AF, N being a positive integer;
a third-type indicator value, used to indicate that first K bits of the identifier of the service provider to which the target AF belongs serve as the identifier-related information of the target AF, K being a positive integer; or
a fourth-type indicator value, used to indicate that last Q bits of the identifier of the service provider to which the target AF belongs serve as the identifier-related information of the target AF, Q being a positive integer.

44. The method according to any one of claims 33 to 43, wherein prior to transmitting the indication information, the method further comprises:
forwarding the data reported by the each of the one or more terminal devices to the target AF, wherein the data is transmitted from the access network device to the first core network device.

45. The method according to any one of claims 33 to 43, further comprising:
transmitting fourth information to the access network device, wherein the fourth information comprises related information of a device from which the target AF allows the access network device to acquire data.

46. The method according to claim 45, wherein the related information of the device from which the target AF allows the access network device to acquire data comprises at least one of: identifier-related information of the device from which the target AF allows the access network device to acquire data or parameter information of the device from which the target AF allows the access network device to acquire data.

47. The method according to claim 46, wherein the parameter information of the device from which the target AF allows the access network device to acquire data comprises at least one of: a signal frequency of the device from which the target AF allows the access network device to acquire data, a signal waveform of the device from which the target AF allows the access network device to acquire data, a data acquisition time for the device from which the target AF allows the access network device to acquire data, or a location of the device from which the target AF allows the access network device to acquire data.

48. The method according to any one of claims 45 to 47, wherein subsequent to transmitting the indication information, the method further comprises:
forwarding to the target AF data reported by each of one or more terminal devices from which the target AF allows the access network device to acquire data, wherein the data is transmitted from the access network device to the first core network device.

49. An access network device, comprising:
a first communication unit, configured to transmit first information, wherein the first information comprises related information of a target application function (AF), and the first information is used to trigger each of one or more terminal devices associated with the target AF to report data.

50. The access network device according to claim 49, wherein the related information of the target AF comprises one of: an identifier of the target AF, an identifier of a service provider to which the target AF belongs, or identifier-related information of the target AF.

51. The access network device according to claim 50, wherein the identifier-related information of the target AF comprises one of: a portion of the identifier of the target AF or a portion of the identifier of the service provider to which the target AF belongs.

52. The access network device according to any one of claims 49 to 51, wherein the first communication unit is configured to transmit second information prior to transmitting the first information, wherein the second information is used to determine identifier-related information of the target AF.

53. The access network device according to claim 52, wherein the second information comprises one of:
at least one of an identifier of the target AF or a portion of an identifier of the target AF;
at least one of an identifier of a service provider to which the target AF belongs or a portion of an identifier of a service provider to which the target AF belongs; or
indication information used to determine the identifier-related information of the target AF.

54. The access network device according to claim 52 or 53, wherein the second information is carried in one of: a broadcast message, a radio resource control (RRC) message, a medium access control (MAC) control element (CE), or downlink control information (DCI).

55. The access network device according to any one of claims 49 to 54, wherein the first communication unit is configured to receive third information from a first core network device prior to transmitting the first information, wherein the third information is used to determine identifier-related information of the target AF.

56. The access network device according to claim 55, wherein the first communication unit is configured to receive indication information from the first core network device, wherein the indication information comprises the third information, and the indication information is used to instruct the access network device to transmit the first information.

57. The access network device according to claim 55 or 56, wherein the third information comprises one of:
at least one of an identifier of the target AF or a portion of an identifier of the target AF;
at least one of an identifier of a service provider to which the target AF belongs or a portion of an identifier of a service provider to which the target AF belongs; or
indication information used to determine the identifier-related information of the target AF.

58. The access network device according to claim 53 or 57, wherein the indication information used to determine the identifier-related information of the target AF comprises one of:
a first-type indicator value, used to indicate that first M bits of the identifier of the target AF serve as the identifier-related information of the target AF, M being a positive integer;
a second-type indicator value, used to indicate that last N bits of the identifier of the target AF serve as the identifier-related information of the target AF, N being a positive integer;
a third-type indicator value, used to indicate that first K bits of the identifier of the service provider to which the target AF belongs serve as the identifier-related information of the target AF, K being a positive integer; or
a fourth-type indicator value, used to indicate that last Q bits of the identifier of the service provider to which the target AF belongs serve as the identifier-related information of the target AF, Q being a positive integer.

59. The access network device according to any one of claims 49 to 55, wherein the first communication unit is configured to receive indication information from a first core network device prior to transmitting the first information, wherein the indication information is used to instruct the access network device to transmit the first information.

60. The access network device according to any one of claims 49 to 55, wherein the first communication unit is configured to: receive the data reported by the each of the one or more terminal devices associated with the target AF subsequent to transmitting the first information; and transmit the data reported by the each of the one or more terminal devices to the target AF.

61. The access network device according to claim 60, wherein the first communication unit is configured to transmit to the target AF the data reported by the each of the one or more terminal devices via a first core network device.

62. The access network device according to any one of claims 49 to 55, further comprising:
a first processing unit, configured to determine, based on fourth information, one or more terminal devices from which the target AF allows the access network device to acquire data;
wherein the first communication unit is configured to receive the fourth information, wherein the fourth information comprises related information of a device from which the target AF allows the access network device to acquire data.

63. The access network device according to claim 62, wherein the related information of the device from which the target AF allows the access network device to acquire data comprises at least one of: identifier-related information of the device from which the target AF allows the access network device to acquire data or parameter information of the device from which the target AF allows the access network device to acquire data.

64. The access network device according to claim 63, wherein the parameter information of the device from which the target AF allows the access network device to acquire data comprises at least one of: a signal frequency of the device from which the target AF allows the access network device to acquire data, a signal waveform of the device from which the target AF allows the access network device to acquire data, a data acquisition time for the device from which the target AF allows the access network device to acquire data, or a location of the device from which the target AF allows the access network device to acquire data.

65. The access network device according to any one of claims 62 to 64, wherein the first communication unit is configured to:
receive the data reported by the each of the one or more terminal devices associated with the target AF; and
transmit to the target AF data reported by each of the one or more terminal devices from which the target AF allows the access network device to acquire data.

66. The access network device according to any one of claims 49 to 65, wherein the terminal device is a zero-power terminal.

67. A first terminal device, comprising:
a second communication unit, configured to receive first information, wherein the first information comprises related information of a target application function (AF), and the first information is used to trigger each of one or more terminal devices associated with the target AF to report data.

68. The first terminal device according to claim 67, wherein the second communication unit is configured to receive the first information from an access network device.

69. The first terminal device according to claim 67 or 68, further comprising:
a second processing unit, configured to control the second communication unit to report data to an access network device in a case where the second processing unit determines, based on the related information of the target AF, that the first terminal device is a terminal device associated with the target AF;
wherein the second communication unit is configured to report data to the access network device.

70. The first terminal device according to any one of claims 67 to 69, wherein the related information of the target AF comprises one of: an identifier of the target AF, an identifier of a service provider to which the target AF belongs, or identifier-related information of the target AF.

71. The first terminal device according to claim 70, wherein the identifier-related information of the target AF comprises one of: a portion of the identifier of the target AF or a portion of the identifier of the service provider to which the target AF belongs.

72. The first terminal device according to claim 71, wherein the second communication unit is configured to receive second information from an access network device prior to receiving the first information, wherein the second information is used to determine the identifier-related information of the target AF.

73. The first terminal device according to claim 72, wherein the second information comprises one of:
at least one of the identifier of the target AF or the portion of the identifier of the target AF;
at least one of the identifier of the service provider to which the target AF belongs or the portion of the identifier of the service provider to which the target AF belongs; or
indication information used to determine the identifier-related information of the target AF.

74. The first terminal device according to claim 72 or 73, wherein the second information is carried in one of: a broadcast message, a radio resource control (RRC) message, a medium access control (MAC) control element (CE), or downlink control information (DCI).

75. The first terminal device according to claim 71, wherein the second communication unit is configured to receive fifth information from a first core network device prior to receiving the first information, wherein the fifth information is used to determine the identifier-related information of the target AF.

76. The first terminal device according to claim 75, wherein the fifth information comprises one of:
at least one of the identifier of the target AF or the portion of the identifier of the target AF;
at least one of the identifier of the service provider to which the target AF belongs or the portion of the identifier of the service provider to which the target AF belongs; or
indication information used to determine the identifier-related information of the target AF.

77. The first terminal device according to claim 75 or 76, wherein the fifth information is carried in a non-access stratum (NAS) message.

78. The first terminal device according to claim 77, wherein the NAS message is one of a registration accept message or a configuration update message.

79. The first terminal device according to claim 73 or 76, wherein the indication information used to determine the identifier-related information of the target AF comprises one of:
a first-type indicator value, used to indicate that first M bits of the identifier of the target AF serve as the identifier-related information of the target AF, M being a positive integer;
a second-type indicator value, used to indicate that last N bits of the identifier of the target AF serve as the identifier-related information of the target AF, N being a positive integer;
a third-type indicator value, used to indicate that first K bits of the identifier of the service provider to which the target AF belongs serve as the identifier-related information of the target AF, K being a positive integer; or
a fourth-type indicator value, used to indicate that last Q bits of the identifier of the service provider to which the target AF belongs serve as the identifier-related information of the target AF, Q being a positive integer.

80. The first terminal device according to any one of claims 67 to 79, wherein the terminal device is a zero-power terminal.

81. A first core network device, comprising:
a third communication unit, configured to transmit indication information, wherein the indication information is used to instruct an access network device to transmit first information, the first information comprising related information of a target application function (AF), and the first information being used to trigger each of one or more terminal devices associated with the target AF to report data.

82. The first core network device according to claim 81, wherein the related information of the target AF comprises one of: an identifier of the target AF, an identifier of a service provider to which the target AF belongs, or identifier-related information of the target AF.

83. The first core network device according to claim 82, wherein the identifier-related information of the target AF comprises one of: a portion of the identifier of the target AF or a portion of the identifier of the service provider to which the target AF belongs.

84. The first core network device according to any one of claims 81 to 83, wherein the indication information comprises third information, wherein the third information is used to determine identifier-related information of the target AF.

85. The first core network device according to any one of claims 81 to 83, wherein the third communication unit is configured to transmit third information to the access network device prior to transmitting the indication information, wherein the third information is used to determine the related information of the target AF.

86. The first core network device according to claim 84 or 85, wherein the third information comprises one of:
at least one of an identifier of the target AF or a portion of an identifier of the target AF;
at least one of an identifier of a service provider to which the target AF belongs or a portion of an identifier of a service provider to which the target AF belongs; or
indication information used to determine the identifier-related information of the target AF.

87. The first core network device according to any one of claims 81 to 83 and 85, wherein the third communication unit is configured to transmit fifth information to a first terminal device prior to transmitting the indication information, wherein the fifth information is used to determine identifier-related information of the target AF.

88. The first core network device according to claim 87, wherein the fifth information comprises one of:
at least one of an identifier of the target AF or a portion of an identifier of the target AF;
at least one of an identifier of a service provider to which the target AF belongs or a portion of an identifier of a service provider to which the target AF belongs; or
indication information used to determine the identifier-related information of the target AF.

89. The first core network device according to claim 87 or 88, wherein the fifth information is carried in a non-access stratum (NAS) message.

90. The first core network device according to claim 89, wherein the NAS message is one of a registration accept message or a configuration update message.

91. The first core network device according to claim 86 or 88, wherein the indication information used to determine the identifier-related information of the target AF comprises one of:
a first-type indicator value, used to indicate that first M bits of the identifier of the target AF serve as the identifier-related information of the target AF, M being a positive integer;
a second-type indicator value, used to indicate that last N bits of the identifier of the target AF serve as the identifier-related information of the target AF, N being a positive integer;
a third-type indicator value, used to indicate that first K bits of the identifier of the service provider to which the target AF belongs serve as the identifier-related information of the target AF, K being a positive integer; or
a fourth-type indicator value, used to indicate that last Q bits of the identifier of the service provider to which the target AF belongs serve as the identifier-related information of the target AF, Q being a positive integer.

92. The first core network device according to any one of claims 81 to 91, wherein the third communication unit is configured to forward to the target AF the data reported by the each of the one or more terminal devices subsequent to transmitting the indication information, wherein the data is transmitted from the access network device to the first core network device.

93. The first core network device according to any one of claims 81 to 91, wherein the third communication unit is configured to transmit fourth information to the access network device, wherein the fourth information comprises related information of a device from which the target AF allows the access network device to acquire data.

94. The first core network device according to claim 93, wherein the related information of the device from which the target AF allows the access network device to acquire data comprises at least one of: identifier-related information of the device from which the target AF allows the access network device to acquire data or parameter information of the device from which the target AF allows the access network device to acquire data.

95. The first core network device according to claim 94, wherein the parameter information of the device from which the target AF allows the access network device to acquire data comprises at least one of: a signal frequency of the device from which the target AF allows the access network device to acquire data, a signal waveform of the device from which the target AF allows the access network device to acquire data, a data acquisition time for the device from which the target AF allows the access network device to acquire data, or a location of the device from which the target AF allows the access network device to acquire data.

96. The first core network device according to any one of claims 93 to 95, wherein the third communication unit is configured to: subsequent to transmitting the indication information, forward to the target AF data reported by each of one or more terminal devices from which the target AF allows the access network device to acquire data, wherein the data is transmitted from the access network device to the first core network device.

97. An access network device, comprising: a transceiver, a processor, and a memory; wherein
the memory is configured to store at least one computer program; and
the processor is configured to load and run the at least one computer program from the memory, to cause the access network device to perform the method as defined in any one of claims 1 to 18.

98. A first terminal device, comprising: a transceiver, a processor, and a memory; wherein
the memory is configured to store at least one computer program; and
the processor is configured to load and run the at least one computer program from the memory, to cause the first terminal device to perform the method as defined in any one of claims 19 to 32.

99. A first core network device, comprising: a transceiver, a processor, and a memory; wherein
the memory is configured to store at least one computer program; and
the processor is configured to load and run the at least one computer program from the memory, to cause the first core network device to perform the method as defined in any one of claims 33 to 48.

100. A chip, comprising a processor, wherein the processor is configured to load and run at least one computer program from a memory to cause a device equipped with the chip to perform the method as defined in any one of claims 1 to 18, or the method as defined in any one of claims 19 to 32, or the method as defined in any one of claims 33 to 48.

101. A computer-readable storage medium, storing at least one computer program, wherein the at least one computer program, when loaded and run by a device, causes the device to perform the method as defined in any one of claims 1 to 18, or the method as defined in any one of claims 19 to 32, or the method as defined in any one of claims 33 to 48.

102. A computer program product, comprising at least one computer program instruction, wherein the at least one computer program instruction, when loaded and executed by a computer, causes the computer to perform the method as defined in any one of claims 1 to 18, or the method as defined in any one of claims 19 to 32, or the method as defined in any one of claims 33 to 48.

103. A computer program, wherein the computer program, when loaded and run by a computer, causes the computer to perform the method as defined in any one of claims 1 to 18, or the method as defined in any one of claims 19 to 32, or the method as defined in any one of claims 33 to 48.
